# EUROPÄISCHE PATENTSCHRIFT

(11) **EP 3 075 175 B1**
(45) Veröffentlichungstag und Bekanntmachung des Hinweises auf die Patenterteilung: **25.08.2021**
(21) Anmeldenummer: 14790604.4
(22) Anmeldetag: 29.10.2014
(51) Int. Cl.: H04W 4/02, H04W 64/00, H04W 4/029, H04W 88/08, H04W 88/02

(54) **VERFAHREN UND VORRICHTUNG ZUR ÜBERWACHUNG DER POSITION ODER POSITIONSÄNDERUNG EINES OBJEKTS**
METHOD AND APPARATUS FOR MONITORING THE POSITION OR CHANGE OF POSITION OF AN OBJECT
PROCÉDÉ ET DISPOSITIF DE SURVEILLANCE DE LA POSITION OU D'UN CHANGEMENT DE LA POSITION D'UN OBJET

(30) Priorität: 13.11.2013 DE 102013223104
(43) Veröffentlichungstag der Anmeldung: 05.10.2016
(73) Patentinhaber: Bayerische Motoren Werke Aktiengesellschaft, 80809 München (DE)
(72) Erfinder: ZIMMERMANN, Sebastian, 80331 München (DE)
(86) Internationale Anmeldenummer: PCT/EP2014/073208
(87) Internationale Veröffentlichungsnummer: WO 2015/071100

(56) Entgegenhaltungen:
- EP-A1- 2 012 480
- EP-A2- 1 136 792
- US-A1- 2008 252 487
- US-B1- 8 229 473
- None

## Beschreibung

Die vorliegende Erfindung betrifft die technische Überwachung von Objekten, insbesondere von Fahrzeugen, mittels eines Mobilfunknetzes.

Aus dem Stand der Technik ist es bekannt, Objekte, insbesondere Kraftfahrzeuge, mithilfe technischer Hilfsmittel hinsichtlich ihrer räumlichen Position zu überwachen. Ein Ziel der Überwachung kann es dabei insbesondere sein, unvorhergesehene Bewegungen des Objekts, zum Beispiel bei einem Diebstahl, zu erkennen, um gegebenenfalls drauf reagieren zu können. Andere bekannte Anwendungsfelder betreffen die Erfassung von Fahrzeugpositionen zum Zwecke der Ortung, insbesondere im Rahmen des Flottenmanagements, beispielsweise für Flotten von Mietwägen, Bussen oder Lastkraftwagen, oder die Erfassung zu Zwecken der Mauterhebung.

Die Positionsbestimmung erfolgt dabei in vielen Fällen mithilfe von satellitengestützten Positionsbestimmungssystemen, insbesondere mithilfe des globalen Positionierungssystems GPS. Zusätzlich gibt es auch weitere satellitengestützte Positionsbestimmungssysteme wie beispielsweise das derzeit im Aufbau befindliche europäische "Galileo"-System. Daneben ist es bekannt, Positionsänderungen eines Fahrzeugs mit Hilfe von Radsensoren zu erfassen.

Moderne Kraftfahrzeuge sind darüber hinaus in der Lage, über ein Schlüsselfunksystem die Annäherung eines zum Fahrzeug gehörenden Schlüssels im Nahbereich des Fahrzeugs über ein entsprechendes Schlüsselfunksignal zu erkennen und auch darauf zu reagieren, beispielsweise durch Entsperrung einer Schließanlage des Fahrzeugs.

Darüber hinaus ist es bekannt, dass Fahrzeuge, insbesondere Kraftfahrzeuge, mit einer Netzwerkzugangsvorrichtung ausgestattet sein können, mit deren Hilfe eine Kommunikationsverbindung zu einem Funknetz, insbesondere zu einem Mobilfunknetz, hergestellt werden kann. Zu den am weitesten verbreiteten Mobilfunknetzen gehören sogenannte zellulare Mobilfunknetze, insbesondere gemäß einem der bekannten Mobilfunkstandards GSM, GPRS, EDGE, 3G und LTE. Solche zellularen Mobilfunknetze weisen wenigstens eine, in aller Regel aber eine Vielzahl von sogenannten Mobilfunkbasisstationen auf. Die Herstellung einer Kommunikationsverbindung einer Netzwerkzugangsvorrichtung mit dem Mobilfunknetz erfolgt dabei mittels einer Funkverbindung zwischen der Netzwerkzugangsvorrichtung und wenigstens einer dieser Mobilfunkbasisstationen. Die Mobilfunkbasisstationen sind dabei mit weiteren Komponenten des Mobilfunknetzes, insbesondere dem so genannten Kernnetz (Core Network), und auch in aller Regel untereinander sowie mit anderen Kommunikationsnetzen, insbesondere dem herkömmlichen landgestützten Telefonfestnetz (PSTN) mittels Kommunikationsverbindungen verbunden, die aber nicht funkgestützt sein müssen.

So offenbart die europäische Patentschrift EP 1 484 731 B1 ein Fahrzeugortungssystem für gestohlene Fahrzeuge, welche jeweils eine Kommunikationseinheit enthalten, die auch einen GPS-Empfänger aufweist. Über den GPS-Empfänger wird dabei die Position des Fahrzeugs erfasst und durch die Kommunikationseinheit des Fahrzeugs über ein Funknetz an eine nicht selbst zum Funknetz gehörende Verarbeitungszentrale übermittelt, die anhand der Positionsinformationen beurteilt, ob sich die Position des Fahrzeugs verändert hat. Ist dies der Fall, so kann ein Benachrichtigungssignal an ein vorbestimmtes mobiles Telefon oder einen Computer des Fahrzeuginhabers übermittelt werden oder die aktuelle Position des Fahrzeugs auf einer Karte dargestellt werden.

Aus der US 2008/252487 A1 ist ein Asset-Managementsystem für Fahrzeugflotten bekannt, bei dem die Fahrzeuge über einen GPS-Empfänger verfügen und in der Lage sind, über eine Kommunikationsverbindung über ein zelluläres Mobilfunknetz mit einer entsprechenden Basisstation zu kommunizieren um fahrzeugbezogene Daten wie beispielsweise GPS-Positionsdaten und Geschwindigkeitsdaten des Fahrzeugs an die Basisstation zu übermitteln.

Aus der EP 2 012 480 A1 ist ein Verfahren zur Bestimmung eines Kommunikationsmodus in einem Kommunikationssystem beschrieben. Es dient dazu, festzustellen, ob zwei mobile Stationen eines zellulären Mobilfunknetzwerks besser indirekt über dieses Netzwerk oder über eine direkte Peer-To-Peer Verbindung, etwa über kurzreichweitigen Funk, miteinander kommunizieren sollen.

In der EP 1 136 792 A2 ist ein System zur Alarmierung eines Fahrers beim Auftreten gefährlicher Situationen beschrieben. Dazu verfügt das Fahrzeug über eine Detektorvorrichtung, die den Zustand des Fahrzeugs detektiert und entsprechende Fahrzeugdaten mittels einer Kommunikationsvorrichtung an einen fahrzeugexternen Server übermittelt.

Aus der US 8,229,473 B1 ist ein Verfahren für "Geo-Fencing" bekannt, mit dem festgestellt wird, ob eine Mobilkommunikationsvorrichtung, also etwa ein Mobiltelefon, einen definierten geographischen Bereich verlässt. Dabei umfasst der Bereich eine oder mehrere Zellen eines Mobilfunknetzes.

Der Erfindung liegt vor diesem Hintergrund die Aufgabe zugrunde, die technische Überwachung von Objekten, insbesondere von Fahrzeugen, weiter zu verbessern.

Eine Lösung dieser Aufgabe wird gemäß der Lehre der unabhängigen Ansprüche erreicht.

Verschiedene Ausführungsformen und Weiterbildungen der Erfindung sind Gegenstand der Unteransprüche.

Ein erster Aspekt der Erfindung betrifft ein Verfahren zur Überwachung eines Objekts, insbesondere eines Fahrzeugs, mittels einer oder mehreren Mobilfunkbasisstationen eines Mobilfunknetzes, wobei das Objekt eine erste Netzwerkzugangsvorrichtung für das Mobilfunknetz aufweist, die in einer Kommunikationsverbindung mit wenigstens einer der Mobilfunkbasisstationen steht. Das Verfahren umfasst dabei die folgenden Schritte:
(S1a) Empfangen von ersten Daten von der ersten Netzwerkzugangsvorrichtung durch die wenigstens eine Mobilfunkbasisstation und
(S2a) Erfassen einer räumlichen Position oder einer räumlichen Positionsänderung des Objekts auf Basis der ersten Daten;
(S3) Überprüfen der erfassten Position oder Positionsänderung dahingehend, ob sie ein vorbestimmtes Kriterium erfüllt; und
(S4) wenn dies der Fall ist, Ausgeben eines vorbestimmten Signals;

Dabei wird zumindest einer der Schritte S2a und S3 durch die wenigstens eine Mobilfunkbasisstation ausgeführt.

Das Verfahren umfasst weiterhin folgende Schritte:
Feststellen in einer Überwachungsvorrichtung des Objekts, ob eine Deaktivierung der ersten Netzwerkzugangsvorrichtung oder ihre Ausbuchung aus dem Mobilfunknetz initiiert wird oder bereits erfolgt ist; und wenn dies der Fall ist, Auslösen des vorbestimmten Signals. Das vorbestimmte Signal wird an eine jeweilige vorbestimmte Netzwerkzugangsvorrichtung zumindest eines Empfängers adressiert, um diesen zu alarmieren. Zusätzlich ist die erste Netzwerkzugangsvorrichtung in ein Fahrzeug integriert oder damit über eine Datenverbindung, welche insbesondere eine drahtgebundene oder optische Datenverbindung oder kurzreichweitige Funkdatenverbindung (z.B. per Bluetooth) sein kann, verbunden und das vorbestimmte Signal umfasst zumindest ein Signal, mittels dessen die Mobilfunkbasisstation über die Kommunikationsverbindung an die erste Netzwerkzugangsvorrichtung eine Signalisierung zur Steuerung oder Regelung einer oder mehrerer Funktionen des Fahrzeugs sendet.

Unter einem "Objekt" im Sinne der Erfindung ist ein beliebiger Gegenstand zu verstehen, der so ausgestattet ist, dass er eine Kommunikationsverbindung mit einem, insbesondere zellularen Mobilfunknetz aufnehmen kann. Insbesondere sind Mobiltelefone, Computer, Tablet-Computer und Funk-Transponder, und Fahrzeuge die so ausgestattet sind, dass sie sich in ein solches Mobilfunknetz einbuchen können, selbst Objekte im Sinne der Erfindung.

Unter einem "Fahrzeug" im Sinne der Erfindung ist ein mobiles Verkehrsmittel zum Transport von Personen oder Gegenständen zu verstehen welches insbesondere ein Landfahrzeug, ein Wasserfahrzeug oder ein Luftfahrzeug sein kann. Ein Fahrzeug kann dabei einen beliebigen Antrieb, insbesondere eine Brennkraftmaschine oder einen Elektroantrieb aufweisen, ohne dass dies jedoch erforderlich ist. Unter anderem sind Personenkraftwagen (PKW), Lastkraftwagen (LKW), Motorräder und Busse wie auch Anhänger dazu jeweils Fahrzeuge im Sinne der Erfindung.

Unter einer "Kommunikationsverbindung" im Sinne der Erfindung ist jede Art von Verbindung zur Daten- oder Informationsübertragung zu verstehen bei der (Nutz-) Informationen von einem Sender (Informationsquelle) zu einem Empfänger (Informationssenke) übermittelt werden können. Dazu wird vom Sender eine physikalische Größe (beispielsweise eine elektrische Spannung oder die Frequenz elektromagnetischer Wellen) zeitlich variiert und vom Empfänger erfasst und gemessen. Eine Datenübertragungsverbindung kann insbesondere in Form einer terrestrischen Funkverbindung (insbesondere über ein Mobilfunknetz) oder einer Satellitenfunkverbindung vorliegen. Insbesondere kann es sich bei der Datenübertragungsverbindung, unabhängig von der gewählten physikalischen Übertragungstechnik, um eine durch das Internet bereitgestellte Datenübertragungsverbindung handeln. Im Falle einer Kommunikationsverbindung zwischen einer Netzwerkzugangsvorrichtung und wenigstens einer Mobilfunkbasisstation eines zellularen Mobilfunknetzes besteht die Kommunikationsverbindung bereits auch dann, wenn die Netzwerkzugangsvorrichtung nur in das Mobilfunknetz eingebucht ist, ohne dass es einer aktiven Sprachoder Nutzdatenübertragung bedarf (insbesondere wenn sich die Netzwerkzugangsvorrichtung in einem "IDLE"-Modus befindet). Insbesondere ist auch eine Verbindung zur Übertragung von Steuerdaten über einen Steuerkanal zwischen einer Netzwerkzugangsvorrichtung und einer Mobilfunkbasisstation, die beispielsweise auf der sogenannten Physikalischen Schicht ("Physical Layer") eines Mobilfunk-Protokollstapels definiert ist, eine "Kommunikationsverbindung" im Sinne der Erfindung.

Unter einer "Netzwerkzugangsvorrichtung" (oder "Network Access Device", NAD) im Sinne der Erfindung ist eine Teilnehmereinheit, insbesondere eine elektronische Schaltung, zu verstehen, mittels derer eine Kommunikationsverbindung zwischen einem Teilnehmergerät, insbesondere einem Teilnehmerendgerät, und einem Kommunikationsnetz, insbesondere einem Mobilfunknetz, hergestellt werden kann. Unter anderem sind Mobiltelefone und Mobilfunkmodems (insbesondere Mobile Station "MS" bzw. "User Equipment" UE gemäß den entsprechenden Definitionen in den bei 3GPP spezifizierten Mobilfunkstandards) sowie andere drahtlose Zugangspunkte zu einem Kommunikationsnetz Netzwerkzugangsvorrichtungen im Sinne der Erfindung.

Unter einer "räumlichen Position" bzw. "räumlichen Positionsänderung" eines Objekts, insbesondere eines Fahrzeugs, im Sinne der Erfindung ist die Position des Objekts im Raum bzw. deren Änderung, zu verstehen. Insbesondere kann die räumliche Position relativ zur Erdoberfläche definiert sein oder bestimmt werden, wie dies etwa im Rahmen der Satellitennavigation mittels GPS, mit oder ohne Unterstützung durch Daten aus einer Landkarte, der Fall ist.

Unter einer "Mobilfunkbasisstation" im Sinne der Erfindung ist eine Basisstation eines, insbesondere zellularen Mobilfunknetzes zu verstehen. Demgemäß sind unter anderem die Basisstationen "BTS", "NodeB" bzw. "eNodeB" gemäß der durch Standardisierungsorganisation 3GPP standardisierten Mobilfunktechnologien der zweiten Mobilfunkgeneration, einschließlich GSM, GPRS, EDGE, der dritten Mobilfunkgeneration 3G bzw. UMTS und der vierten Mobilfunkgeneration LTE bzw. LTE-A, Mobilfunkbasisstationen im Sinne der Erfindung.

Unter einem "Signal" im Sinne der Erfindung ist eine physikalische Größe zu verstehen, bei der ein oder mehrere Parameter der Größe Informationen über zumindest eine variable Größe definieren, darstellen und übertragen können. Insbesondere sind elektrische Signale jeder Art, vor allem auch Funksignale wie sie in einem Mobilfunknetz verwendet werden, "Signale" im Sinne der Erfindung. Sie können insbesondere auch zur Übertragung von Informationen bzw. Daten dienen.

Mit dem ersten Aspekt der Erfindung kann vorteilhaft eine Überwachung eines Objekts, insbesondere eines Fahrzeugs, mithilfe einer oder mehrerer Mobilfunkbasisstationen eines Mobilfunknetzes abhängig von der räumlichen Position bzw. Positionsänderung des Objekts und insbesondere von einem vorbestimmten Kriterium dazu erfolgen. Wenn dabei die Position bzw. Positionsänderung das vorbestimmte Kriterium erfüllt, kann ein entsprechendes vorbestimmtes Signal ausgegeben werden, das am Objekt mittels dessen Netzwerkzugangsvorrichtung empfangen und dort mittels der Steuervorrichtung zur Steuerung oder Regelung, insbesondere zu Auslösung oder Beendigung einer dem Signal zugeordneten Funktion verwendet werden kann. Auf diese Weise können vorteilhaft dezentrale, ggf. schon in der Mobilfunkbasisstation vorhandene Rechen- bzw. Datenverarbeitungskapazitäten zur Fahrzeugüberwachung eingesetzt werden.

Daraus kann sich eine Reihe von weiteren Vorteilen ergeben. Insbesondere kann dies dazu führen, dass keine Daten oder zumindest nur geringere Datenmengen über das Mobilfunknetz und gegebenenfalls weitere damit verknüpfte Kommunikationsnetze zu einer entfernten, die Positionsdaten verarbeitenden Datenverarbeitungseinheit (Backend) übertragen werden müssen. Demgemäß kann die über das Mobilfunknetz bzw. die Kommunikationsnetze zu übertragende Datenmenge sinken, woraus sich eine Vermeidung oder Verringerung von Übertragungskosten, eine Latenzreduktion und eine Verbesserung des sogenannten Quality of Service (QoS) für das Mobilfunknetz als Ganzes, gegebenenfalls für die weiteren Kommunikationsnetze und insbesondere für die Objektüberwachung selbst ergeben können. Insbesondere ist es somit auch möglich, Kommunikationsdaten, die im Rahmen der Mobilfunkanbindung eines Fahrzeugs über seine Netzwerkzugangsvorrichtung sowieso an die Mobilfunkbasisstation übermittelt werden, zur Fahrzeugüberwachung zu nutzen.

Damit einhergehend, kann auch die Sicherheit der Überwachung erhöht werden, da weniger bzw. keine Daten durch die Kommunikationsnetze geleitet werden müssen, wo sie möglicherweise sicherheitsrelevanten Angriffen, insbesondere durch sogenannte "Man-in-the-Middle"-Attacken ausgesetzt sein könnten. Auch kann die unautorisierte Überwindung oder Ausschaltung der Überwachung durch Manipulationen am Objekt erschwert werden. Wenn das Objekt ein Fahrzeug ist, kann die Überwachung insbesondere selbst bei Manipulationen an Sensoren oder Schlüsselfunkanlagen des Fahrzeugs schwerer beeinflusst oder umgangen werden. Dieser Vorteil kann bevorzugt für eine verbesserte Überwachung gegen Diebstahl genutzt werden. Auch kann sich die Standby-Zeit des Fahrzeugs erhöhen, da weder Sensoren noch Schlüsselfunksysteme während der Überwachung mit Energie, insbesondere aus der Fahrzeugbatterie, versorgt werden müssen, um eine Überwachung der Fahrzeugposition zu gewährleisten.

Das Feststellen, ob eine Deaktivierung der ersten Netzwerkzugangsvorrichtung oder ihre Ausbuchung aus dem Mobilfunknetz initiiert wird oder bereits erfolgt ist; und wenn dies der Fall ist, Auslösen des vorbestimmten Signals ermöglicht es zudem, im Rahmen der Objektüberwachung auch unautorisierte Manipulationen, Deaktivierungen oder gar Zerstörungen der Netzwerkzugangsvorrichtung des Objekts zu erkennen und auch in diesem Fall das vorbestimmte Signal auszulösen. Insbesondere im Falle eines Diebstahls oder einer nichtautorisierten Manipulation des Objekts, insbesondere Fahrzeugs, kann das Signal dann insbesondere zu Alarmierung, beispielsweise des Objekteigentümers bzw. des Fahrzeughalters, eines Sicherheitsoder Wachdienstes oder der Polizei, eingesetzt werden und somit bevorzugt an Netzwerkzugangsvorrichtungen der entsprechenden Empfänger adressiert sein.

Nachfolgend werden bevorzugte Ausführungsformen und Weiterbildungen des Verfahrens beschrieben, die jeweils, soweit dies hier nicht ausdrücklich ausgeschlossen wird, beliebig miteinander kombiniert werden können.

Gemäß einer bevorzugten Ausführungsform ist das Objekt ein Fahrzeug, insbesondere ein Personenkraftwagen (PKW), ein Lastkraftwagen (LKW), ein Motorrad, ein Bus, ein Fahrrad oder ein Anhänger zu einem der vorausgehend genannten Fahrzeuge.

Gemäß einer weiteren bevorzugten Ausführungsform ist das Objekt ein Gepäckstück mit integrierter Netzwerkzugangsvorrichtung, insbesondere ein Koffer, eine Tasche oder ein Rucksack. Dies ermöglicht insbesondere eine Diebstahlüberwachung nicht nur eines Fahrzeugs, sondern auch oder stattdessen von Gepäckstücken, welche beispielsweise aus einem, insbesondere abgestellten, Fahrzeug entwendet werden könnten.

Gemäß einer weiteren bevorzugten Ausführungsform enthalten die ersten Daten bereits wenigstens eine Positionskoordinate des Objekts selbst. Insbesondere können diese Daten am Objekt mittels eines Satellitennavigationssystems bestimmt worden sein.

Gemäß einer weiteren bevorzugten Ausführungsform enthalten die ersten Daten Informationen, die zur Herstellung oder zum Aufrechterhalten der Kommunikationsverbindung zwischen der ersten Netzwerkzugangsvorrichtung und der wenigstens einen Mobilfunkbasisstation von ersterer an letztere gesendet werden. Bei der Erfassung der räumlichen Position oder Positionsänderung des Objekts kann diese dann aus diesen Informationen, zumindest grob, abgeleitet oder berechnet werden. Insbesondere können sich diese Informationen zumindest teilweise auf von der ersten Netzwerkzugangsvorrichtung erfasste Parameter der Funkverbindung zur wenigstens einen Mobilfunkbasisstation beziehen, bevorzugt auf die an der ersten Netzwerkzugangsvorrichtung empfangene Signalstärke von Funksignalen der wenigstens einen Mobilfunkbasisstation und/oder andere Parameter dieser Funkverbindung. Ein solcher anderer Parameter kann dabei insbesondere ein Parameter oder Messwert sein, der die Zeitverzögerung zwischen dem Senden und Empfangen eines Signals, d.h. die Signallaufzeit, zwischen der Mobilfunkbasisstation und der ersten Netzwerkzugangsvorrichtung charakterisiert. Dies kann insbesondere bei GSM-basierten Mobilfunknetzen (aber auch bei LTE-Netzen) wenigstens ein dort definierter sogenannter "Timing Advance (TA)"- Parameter sein.

Gemäß einer weiteren bevorzugten Ausführungsform steht eine vorbestimmte zweite Netzwerkzugangsvorrichtung für das Mobilfunknetz in einer Kommunikationsverbindung mit wenigstens einer der Mobilfunkbasisstationen, und das Verfahren weist die folgenden weiteren Schritte auf:
(S1b) Empfangen von zweiten Daten von der zweiten Netzwerkzugangsvorrichtung durch die wenigstens eine Mobilfunkbasisstation und
(S2b) Erfassen einer räumlichen Position oder einer räumlichen Positionsänderung der zweiten Netzwerkzugangsvorrichtung auf Basis der zweiten Daten.
Dabei umfasst das Überprüfen der erfassten Position oder Positionsänderung im Schritt S3 ein Überprüfen der erfassten Positionen oder Positionsänderungen der ersten und der zweiten Netzwerkzugangsvorrichtungen dahingehend, ob sie gemeinsam ein vorbestimmtes Kriterium erfüllen. Wenn dies der Fall ist, wird im Schritt S4 das vorbestimmte Signal ausgegeben. Bevorzugt wird dabei der Schritt S2b durch die wenigstens eine Mobilfunkbasisstation ausgeführt, die in Kommunikationsverbindung mit der zweiten Netzwerkzugangsvorrichtung steht.

Mit dieser Ausführungsform ist es möglich, nicht nur ein einzelnes Objekt bezüglich seiner Position bzw. Positionsänderung zu überwachen, sondern auch eine relative Annäherung einer vorbestimmten zweiten Netzwerkzugangsvorrichtung, insbesondere eines Mobiltelefons oder eines zweiten Fahrzeugs, an das erste Fahrzeug, oder umgekehrt, zu erkennen. Wird dann das vorbestimmte Kriterium gemeinsam durch die Positionen bzw. Positionsänderungen beider Netzwerkzugangsvorrichtungen erfüllt, so wird wiederum ein entsprechendes vorbestimmtes Signal ausgegeben. Dieses Signal kann dabei insbesondere an das überwachte Objekt oder an die zweite Netzwerkzugangsvorrichtung gesendet werden, um dort die dem Signal zugeordnete Funktionalität zu steuern oder zu regeln, insbesondere zu aktivieren oder zu deaktivieren.

Bevorzugt kann mittels dieser Ausführungsform auch eine Überwachung eines Gebietes, das durch die Zellen einer oder mehrerer Mobilfunkbasisstationen definiert ist, erfolgen, wobei sich die erste Netzwerkzugangsvorrichtung innerhalb dieses Gebietes befindet. Dazu werden eine Mehrzahl, bevorzugt aber sämtliche Netzwerkzugangsvorrichtungen, die sich schon im Zielgebiet befinden oder sich in dieses hinein bewegen und mit wenigstens einer der Mobilfunkbasisstationen in Kommunikationsverbindung stehen bzw. treten, daraufhin überprüft, ob sie jeweils eine zweite vorbestimmte Netzwerkvorrichtung im oben genannten Sinne darstellen. Das vorbestimmte Kriterium kann dann bereits die Präsenz der entsprechenden vorbestimmten zweiten Netzwerkzugangsvorrichtung im Zielgebiet sein, oder aber eines oder mehrere zusätzliche Einzelkriterien umfassen. Das bei Erfüllung des vorbestimmten Kriteriums ausgelöste Signal kann insbesondere so konfiguriert sein, dass dadurch bei wenigstens einem Gerät, welches das Signal empfängt und das nicht das überwachte Objekt bzw. dessen (erste) Netzwerkzugangsvorrichtung selbst sein muss, eine oder mehrere bestimmte, vorkonfigurierte Aktionen ausgelöst werden. Solche Aktionen können bevorzugt sein: eine Zählung der Häufigkeit oder Dichte von zweiten Netzwerkzugangsvorrichtungen, insbesondere derer von Fahrzeugen, im Zielgebiet; eine Aktivierung von Funktionen in einem Gebäude im Zielgebiet, insbesondere der Heizung oder Kühlung, einer Beleuchtung oder einer Signalisierungsanlage, eines Tores oder einer Schranke im bzw. am Gebäude oder auf dessen Grundstück oder einem Weg dorthin; oder eine Aktivierung beliebiger sonstiger Events einschließlich Aktivitäten in sozialer Medien (z.B. Tweets, emails, SMS usw.).

Gemäß einer ersten Variante dieser Ausführungsform wird die oder jede zweite Netzwerkzugangsvorrichtung gegenüber der wenigstens einen Mobilfunkbasisstation, die in Kommunikationsverbindung mit der ersten Netzwerkzugangsvorrichtung steht, identifiziert und so vorbestimmt. Dies kann insbesondere mittels einer einmaligen Identifizierungsnachricht erfolgen, welche von der ersten Netzwerkzugangsvorrichtung oder der zweiten Netzwerkzugangsvorrichtung an einer der Mobilfunkbasisstationen des Mobilfunknetzes empfangen wird.

Gemäß weiterer Varianten dieser Ausführungsform kann die oder jede vorbestimmte zweite Netzwerkzugangsvorrichtung eine beliebige Netzwerkzugangsvorrichtung aus einer vorbestimmten Gruppe von Netzwerkzugangsvorrichtungen sein. Dabei kann die Gruppe insbesondere positiv, d.h. durch eine "Whitelist" zugelassener Netzwerkzugangsvorrichtungen, oder negativ durch Ausschluss aller anderen, d.h. durch eine "Blacklist" nicht zugelassener Netzwerkzugangsvorrichtungen, definiert sein. Insbesondere kann die Whitelist so festgelegt sein, dass sie sämtliche Netzwerkzugangsvorrichtungen ohne Einschränkung umfasst bzw. gleichbedeutend kann die Blacklist insbesondere leer sein.

Gemäß einer weiteren bevorzugten Ausführungsform ist das Mobilfunknetz ein zellulares Mobilfunknetz und das Erfassen der räumlichen Position oder Positionsänderung einer Netzwerkzugangsvorrichtung umfasst ein Erfassen eines Zellwechsels, "Handover", der entsprechenden Netzwerkzugangsvorrichtung. Bevorzugt erfolgt diese Erfassung der Position oder Positionsänderung durch eine oder mehrere der Mobilfunkbasisstationen selbst. In einem zellularen Mobilfunknetz definieren die einzelnen Mobilfunkbasisstationen jeweils die Zellen des Mobilfunknetzes. Wenn sich nun eine Netzwerkzugangsvorrichtung innerhalb des zellularen Mobilfunknetzes bewegt und dabei den von einer ersten Mobilfunkbasisstation abgedeckten Sendebereich (Zelle) verlässt und sich in den Sendebereich einer benachbarten zweiten Mobilfunkbasisstation gibt und dabei die zunächst mit der ersten Mobilfunkbasisstation bestehende Funkverbindung durch eine neue Funkverbindung mit der zweiten Mobilfunkbasisstation ersetzt wird, so spricht man von einem "Zellwechsel" oder "Handover". Da die Mobilfunkbasisstationen also an einem derartigen Zellwechsel beteiligt sind, liegen an den entsprechenden Mobilfunkbasisstationen Informationen, d.h. Daten, darüber vor, welche Netzwerkzugangsvorrichtungen die der jeweiligen Basisstation zugeordnete Zelle verlassen haben bzw. dorthin gewechselt sind. Aus der Kenntnis der räumlichen Position und Ausbreitung der Zelle lässt sich somit der Aufenthaltsort einer Netzwerkzugangsvorrichtung zumindest grob bestimmen, wobei die Genauigkeit von der Zellgröße beeinflusst wird. Gerade in urbanen Gebieten sind die Zellgrößen meist sehr klein, so dass insbesondere dort eine relativ gute Ortung der Netzwerkzugangsvorrichtungen allein anhand der momentanen Zuordnung der im Mobilfunknetz eingebuchten Netzwerkzugangsvorrichtungen zu den entsprechenden Mobilfunkbasisstationen erfolgen kann. Dies kann den Vorteil haben, dass keine weiteren Informationen, insbesondere aus zusätzlichen Positionsbestimmungssystemen wie etwa der Satellitennavigation, erforderlich sind, um die Positionen oder Positionsänderungen von Netzwerkzugangsvorrichtungen, insbesondere der Netzwerkzugangsvorrichtung eines Fahrzeugs, zu bestimmen und darauf beruhend die Überwachung zu implementieren.

Gemäß einer Variante dieser Ausführungsform handelt es sich bei dem Mobilfunknetz um ein Mobilfunknetz gemäß dem LTE-Standard welches demgemäß, wie in diesem Standard definiert, eine Mobility Management Entity (MME) aufweist. Dabei benachrichtigt die MME bei einem Tracking Area Update wenigstens eine der mit der Netzwerkzugangsvorrichtung des Objekts in Kommunikationsverbindung stehenden Mobilfunkbasisstationen sowie gegebenenfalls eine oder mehrere weitere an der Überwachung des Objekts beteilige Datenverarbeitungsvorrichtungen (Backends). Falls erforderlich führt sie dazu davor auf Anordnung wenigstens einer der Mobilfunkbasisstationen oder aufgrund einer Anordnung einer anderen Entität im Mobilfunknetzwerk einen Suchruf durch, um die gegenwärtige Tracking Area der Netzwerkzugangsvorrichtung des Objekts festzustellen. Im Rahmen des LTE-Standards ist dabei insbesondere dann von einem Tracking Area Update die Rede, wenn sich eine Netzwerkzugangsvorrichtung (hier die des Objekts, insbesondere eines Fahrzeugs) im sogenannten LTE_IDLE Mode befindet und aufgrund einer Bewegung der Netzwerkzugangsvorrichtung ein Zellwechsel in eine Zelle erfolgt, die zu einer anderen Tracking Area gehört, als die Zelle, in der die Netzwerkzugangsvorrichtung gegenwärtig eingebucht ist.

Gemäß einer weiteren bevorzugten Ausführungsform umfasst das Erfassen der räumlichen Position oder Positionsänderung einer Netzwerkzugangsvorrichtung ein mehrfaches Senden eines Paging-Signals durch wenigstes eine der Mobilfunkbasisstationen an die Netzwerkzugangsvorrichtung des Objekts sowie eine Prüfung dahingehend, ob auf das Paging-Signal hin ein entsprechendes Antwortsignal darauf von der Netzwerkzugangsvorrichtung des Objekts über die Kommunikationsverbindung empfangen wurde. Wenn dies der Fall ist, wird somit die Präsenz des Objekts in der zu der entsprechenden Mobilfunkbasisstation gehörenden Zelle und somit keine Positionsänderung festgestellt. Wird dagegen, zumindest wiederholt, kein von der Netzwerkzugangsvorrichtung des überwachten Objekts stammendes Antwortsignal empfangen, so wird dies als Erfüllung des vorbestimmten Kriteriums gewertet und das vorbestimmte Signal wird ausgelöst. Bevorzugt werden auch die Prüfung auf Empfang eines Antwortsignals und gegebenenfalls der Auslösung des Signals durch die wenigstens eine Mobilfunkbasisstation ausgeführt.

Gemäß einer weiteren bevorzugten Ausführungsform umfasst das vorbestimmte Kriterium eines der folgenden Kriterien (a) bis (f) oder eine Kombination daraus:
(a) eine beliebige absolute Veränderung der erfassten Position der ersten Netzwerkzugangsvorrichtung,
(b) eine beliebige absolute Veränderung der erfassten Position der ersten Netzwerkzugangsvorrichtung um eine vorbestimmte Mindestentfernung oder mehr;
(c) ein Zellwechsel der ersten Netzwerkzugangsvorrichtung;
(d) ein nicht vorausgehend autorisierter Zellwechsel der ersten Netzwerkzugangsvorrichtung;
(e) wenn ein Einbuchen einer zweiten Netzwerkzugangsvorrichtung in das Mobilfunknetz erfolgt oder schon erfolgt ist:
   (e1) ein Unterschreiten einer vorbestimmten Mindestentfernung zwischen den erfassten Positionen der ersten und der zweiten Netzwerkzugangsvorrichtungen; oder
   (e2) ein Zellwechsel der zweiten Netzwerkzugangsvorrichtung von einer anderen Mobilfunkzelle des Mobilfunknetzes in dieselbe Mobilfunkzelle, in der sich auch die erste Netzwerkzugangsvorrichtung befindet.

Gemäß einer bevorzugten Variante, bei der das vorausgehend genannte Kriterium (e1) verwendet wird, wird zusätzlich zur aktuellen Entfernung zwischen den erfassten Positionen der ersten und der zweiten Netzwerkzugangsvorrichtungen auch die antizipierte Entwicklung der Entfernung zwischen beiden, bevorzugt von wenigstens einer der Mobilfunkbasisstationen, abgeschätzt. Dies kann insbesondere auf der Basis von vorausgehenden Entfernungsbestimmungen für den bisherigen Verlauf der Annäherung erfolgen. Auf diese Weise kann eine optimierte Konfiguration des Signals erreicht werden. Insbesondere kann für den Fall, dass es sich bei dem überwachten Objekt um ein Fahrzeug handelt eine Vorkonditionierung des Fahrzeugs, etwa eine Klimatisierungsfunktion, noch genauer und früher gesteuert oder geregelt werden. Dies kann vor allem bei Funktionen mit erhöhtem Zeitbedarf, etwa bei Heiz- oder Kühlfunktionen und bei einer raschen Annäherung der zweiten Netzwerkzugangsvorrichtung vorteilhaft sein.

Auf diese Weise kann das vorbestimmte Kriterium durch eine entsprechende Auswahl oder Kombination von Einzelkriterien flexibel und vielseitig an die jeweiligen Anforderungen der gewünschten Objektüberwachung angepasst werden.

Gemäß einer weiteren bevorzugten Ausführungsform umfasst das vorbestimmte Signal zumindest ein Signal, mittels dessen über das Mobilfunknetz an eine vorbestimmte Netzwerkzugangsvorrichtung Informationen zur Ausgabe an einer mit dieser integrierten oder verbundenen Benutzerschnittstelle gesendet werden.

Unter einer "Benutzerschnittstelle" im Sinne der Erfindung ist dabei eine Vorrichtung zu verstehen, die es einem Benutzer erlaubt, mit einem Gerät oder einer Maschine passiv oder aktiv in Interaktion zu treten. Insbesondere sind akustische Tongeber, optische Anzeigen jeder Art, wie etwa Bildschirme, berührungsempfindliche Oberflächen und "Touchscreens", Vibrationsmechanismen, Eingabe- und Zeigegeräte Benutzerschnittstellen im Sinne der Erfindung.

Gemäß einiger Ausführungsformen kann die Signalisierung zur Steuerung oder Regelung, insbesondere Aktivierung oder Deaktivierung, einer der folgenden Funktionen des Fahrzeugs, oder einer Kombination daraus, konfiguriert sein:
- ein Unterbrechen oder Beschränken der Fahrbereitschaft des Fahrzeugs;
- ein Erfassen der Position oder eines Zustands des Fahrzeugs und Senden der Position beziehungsweise von Informationen über den Zustand über eine Kommunikationsverbindung, insbesondere über das Mobilfunknetz;
- eine Funktion einer Alarmanlage;
- ein Ausgeben einer Meldung an einer Benutzerschnittstelle des Fahrzeugs oder der ersten Netzwerkzugangsvorrichtung;
- ein Ausgeben eines akustischer Effekts;
- eine Klimatisierungsfunktion, insbesondere eine (Stand-)Heizfunktion, eine Scheibenentfrostungsfunktion, eine Kühlfunktion, eine Klimaautomatik, oder eine Luftfeuchtigkeitsregulierungsfunktion;
- ein Betrieb von Leuchtmitteln;
- eine Funktion einer Schließanlage;
- eine Einstellung oder Verstellung wenigstens eines Sitzes oder wenigstens eines Spiegels;
- eine Funktion eines Informations- oder Unterhaltungssystems;
- eine Funktion eines Schiebedachs oder Cabriolet-Dachs.

Auf diese Weise ist es möglich, abhängig von den durch das Signal übertragenen Informationen, eine Vielzahl verschiedener Aktionen bzw. Funktionalitäten des Fahrzeugs zu steuern oder zu regeln, insbesondere zu aktivieren oder zu deaktivieren, oder sonstwie zu beeinflussen. In einem bevorzugten Anwendungsfall kann dies dazu verwendet werden, am Fahrzeug Funktionen zu aktivieren, zu steuern oder zu regeln, mit denen sich das Fahrzeug "in Szene" setzt um Aufmerksamkeit von Passanten zu erregen, insbesondere durch akustische oder Beleuchtungseffekte, die Öffnung des Cabrio Dach oder Anzeigen von Informationen auf einer Anzeigevorrichtung. Dies kann insbesondere einer Alarmierung oder aber auch Werbezwecken dienen. Bevorzugt wird dabei durch das Mobilfunknetz, insbesondere durch wenigstens eine Mobilfunkbasisstationen, welche mit dem zu überwachenden Fahrzeug in Kommunikationsverbindung steht, erfasst, ob und bevorzugt wie viele weitere Netzwerkzugangsvorrichtungen, insbesondere Mobiltelefone, sich in der Nähe des Fahrzeugs, mit der ersten Netzwerkzugangsvorrichtung aufhalten. Abhängig vom Ergebnis dieser Auffassung kann dann das vorbestimmte Signal an die erste Netzwerkzugangsvorrichtung zur Steuerung oder Regelung bestimmter Fahrzeugfunktionen konfiguriert und gesendet werden.

Gemäß einer weiteren bevorzugten Ausführungsform erfolgt das Austauschen der ersten Daten zwischen der ersten Netzwerkzugangsvorrichtung und wenigstens einer Mobilfunkbasisstation des Mobilfunknetzes wiederholt, während die Kommunikationsverbindung zwischen wenigstens einer der Mobilfunkbasisstationen und der ersten Netzwerkzugangsvorrichtung besteht. Auf diese Weise kann eine fortlaufende Überwachung des Objekts realisiert werden bei der nicht nur eine einmalige Überwachung zu einem einzigen Zeitpunkt, sondern eine Überwachung zu einer Mehrzahl von Zeitpunkten, insbesondere in regelmäßigen Zeitintervallen, deren Länge einstellbar sein kann, erfolgt. Wird dabei die Zeitspanne zwischen zwei aufeinanderfolgenden Zeitpunkten, zu denen das Austauschen der ersten Daten erfolgt, sehr kurz gewählt, bevorzugt im Bereich von Minuten oder gar Sekunden, so lässt sich eine im wesentlichen lückenlose Überwachung realisieren. Kommt es andererseits darauf an, die Überwachung möglichst ressourcenschonend umzusetzen, so dass die Übertragungskapazität der Luftschnittstelle zwischen der Netzwerkzugangsvorrichtung des Objekts und der Mobilfunkbasisstation bzw. den Mobilfunkbasisstationen sowie deren für die Überwachung bereitgestellte Rechen- bzw. Verarbeitungskapazität durch die Überwachung nur gering belastet werden, so kann die entsprechende Zeitspanne, insbesondere abhängig vom Überwachungsszenario, auch größer gewählt werden. Dadurch kann auch die Stand-by-Zeit von batterieversorgten Objekten, insbesondere von abgestellten Fahrzeugen, verlängert werden, da sich der für die Kommunikationsverbindung zwischen der Netzwerkzugangsvorrichtung des Objekts und der bzw. den Mobilfunkstation erforderliche Stromverbrauch, welcher in der Regel aus der Batterie zu speisen ist, reduziert.

Gemäß einer weiteren bevorzugten Ausführungsform wird ist die erste Netzwerkzugangsvorrichtung in ein Fahrzeug integriert oder damit über eine Datenverbindung verbunden und der Ablauf des Verfahrens wird durch ein Abstellen des Fahrzeugs ausgelöst. Auf diese Weise kann das Fahrzeug selbst, insbesondere anhand des Ausschaltens des Fahrzeugantriebs und bei Brennkraftmaschinen insbesondere der Zündung, automatisch erkennen, ob und wann die Überwachung aktiviert werden soll, ohne dass dazu eine weitere Interaktion mit dem Fahrzeugbenutzer erforderlich ist. Zusätzlich oder alternativ kann das Abstellen auch durch Verschließen einer Schließanlage des Fahrzeugs erkannt werden. Damit lässt sich auch die Sicherheit der Überwachung dahingehend erhöhen, dass durch die automatische Auslösung bei ordnungsgemäßer Funktion kein Wegfall der Überwachung aufgrund einer fehlenden oder falsch ausgeführten manuellen Aktivierung durch den Fahrzeugbenutzer auftreten kann.

Darüber hinaus kann in einer Variante dieser Ausführungsform zusätzlich oder alternativ auch die Möglichkeit vorgesehen werden, den Ablauf des Verfahrens manuell auszulösen. Eine solche manuelle Auslösung kann insbesondere mittels einer Benutzerschnittstelle am Fahrzeug selbst oder aber über eine davon unabhängige Netzwerkzugangsvorrichtung, die insbesondere zu einem Mobiltelefon oder einem bevorzugt tragbaren Computer gehört, ausgelöst werden. Ein Vorteil der manuellen Aktivierung kann darin bestehen, dass diese auch dann ausgelöst werden kann, wenn das Fahrzeug noch nicht abgestellt ist oder anhand einer auf anderen Kriterien beruhenden automatischen Aktivierung ausgelöst wurde.

Die Auslösung der Überwachung wird dann durch die Netzwerkzugangsvorrichtung des Fahrzeugs über eine bereits bestehende oder neu herzustellende Kommunikationsverbindung an mindestens eine der Mobilfunkbasisstationen als entsprechende Benachrichtigung übermittelt.

Gemäß einer weiteren bevorzugten Ausführungsform wird das Verfahren zur Überwachung eines Objekts beendet, wenn die wenigstens eine mit der ersten Netzwerkzugangsvorrichtung in Kommunikationsverbindung stehende Mobilfunkbasisstation von der ersten Netzwerkzugangsvorrichtung eine entsprechende Benachrichtigung zur Beendigung der Überwachung empfängt.

Gemäß einer weiteren bevorzugten Ausführungsform wird das Verfahren durch wenigstens eine Mobilfunkbasisstation des Mobilfunknetzes und eine mit der Mobilfunkbasisstation in Kommunikationsverbindung stehende separate Datenverarbeitungsvorrichtung, die insbesondere ein Server sein kann, gemeinsam ausgeführt, wobei zumindest einer der Schritte S2a, S2b, S3 und S4, durch die Datenverarbeitungsvorrichtung ausgeführt wird. Auf diese Weise kann eine optimale Aufteilung der Verfahrensschritte auf die Mobilfunkbasisstation und eine weitere Datenverarbeitungsvorrichtung erfolgen. Dies kann insbesondere auch dynamisch, bevorzugt abhängig von den an der Mobilfunkbasisstation gerade verfügbaren Rechen- bzw. Verarbeitungskapazitäten erfolgen. Darüberhinaus wird es dadurch auch ermöglicht, komplexe Auswertungs- und Steuerungs- bzw. Regelungsschritte von der Mobilfunkbasisstation auf die zusätzliche Datenverarbeitungsvorrichtung zu verlagern und nur einen bzw. einen Teil der Schritte durch die Mobilfunkbasisstation durchführen zu lassen. Damit lässt sich zum einen eine Zentralisierung derartiger Schritte in nur einer oder wenigen Datenverarbeitungsvorrichtungen realisieren, so dass die Verarbeitung der entsprechenden Verfahrensschritte nicht in jeder der Vielzahl von Mobilfunkbasisstationen in einem typischen Mobilfunknetz vorgesehen sein muss. Auch die Pflege von zur Durchführung des Verfahrens eingesetzter Software, durch Bugfixing oder Updates und Upgrades lässt sich auf diese Weise durch einen im Gegensatz zu im Feld verteilten Mobilfunkbasisstationen deutlich leichteren Zugang zur separaten Datenverarbeitungsvorrichtung und mit geringerem Wartungsaufwand bewerkstelligen. Auch lässt sich so ein besserer Schutz der Überwachungsfunktionalität realisieren, da die separaten Datenverarbeitungsvorrichtungen räumlich von den Basisstationen im Feld getrennt vorgesehen sein können, zum Beispiel in einem Rechenzentrum wo sie gut gegen nicht autorisierten Zugriff gesichert werden können.

Bei einer Variante dieser Ausführungsform empfängt wenigstens eine der Mobilfunkbasisstationen bei oder nach der Aktivierung der Objektüberwachung am Objekt, insbesondere einem Fahrzeug, über die bereits bestehende oder hierzu herzustellende Kommunikationsverbindung zwischen dem Objekt und der Mobilfunkbasisstation von der ersten Netzwerkzugangsvorrichtung die Benachrichtigung, dass mithilfe des Mobilfunknetzes eine Objektüberwachung durchgeführt werden soll. Diese Benachrichtigung wird auch über die Kommunikationsverbindung zwischen der Mobilfunkbasisstation und der Datenverarbeitungsvorrichtung, die bevorzugt über das Mobilfunknetz erfolgt, an die Datenverarbeitungsvorrichtung übermittelt. Dabei kann insbesondere auch eine Kennung der Mobilfunkbasisstation mit übermittelt werden. Auf diese Weise lässt sich eine einfache und zeitnahe Aktivierung der Objektüberwachung bei der Heranziehung einer derartigen separaten Datenverarbeitungsvorrichtung (Backend) zur Durchführung des Verfahrens bewerkstelligen.

Eine Mobilfunkbasisstation umfasst eine Mobilfunkschnittstelle zum Senden und Empfangen von Funksignalen über ein Mobilfunknetz. Die Mobilfunkbasisstation weist darüber hinaus einen oder mehrere Mikroprozessoren, einen Speicher und ein oder mehrere Programme auf, welche in dem Speicher abgelegt sind.

Unter einer "Mobilfunkschnittstelle" im Sinne der Erfindung ist hierbei die Luftschnittstelle einer Mobilfunkbasisstation zu verstehen, mittels derer die Mobilfunkbasisstation über ein Mobilfunknetz Funksignale senden oder empfangen kann. Insbesondere kann eine Mobilfunkschnittstelle unter anderem regelmäßig eine oder mehrere Antennen, eingangsseitige und/oder ausgangsseitige Funksignalverstärker und HF-Transceiver oder getrennte Sende (Transmitter)- und Empfänger (Receiver)-schaltungen sowie eine Digitalschaltung, insbesondere zur Datenverarbeitung im Basisband, aufweisen.

Gemäß einer bevorzugten Ausführungsform sind die einen oder mehreren Mikroprozessoren sowie der Speicher separat von der Mobilfunkschnittstelle ausgeführt, insbesondere in einem separaten Modul der Mobilfunkbasisstation (Edge-Computing Einheit) untergebracht. Auf diese Weise lässt sich eine besonders schnelle und unkomplizierte, wartungsfreundliche Aufrüstung bereits existierender Mobilfunkbasisstationen zur Befähigung das Verfahren gemäß dem ersten Aspekt Erfindung auszuführen, bewerkstelligen.

Ein zweiter Aspekt der Erfindung betrifft eine Überwachungsvorrichtung für ein Objekt, insbesondere für ein Fahrzeug, welches eine Netzwerkzugangsvorrichtung für ein Mobilfunknetz und eine damit über eine Signalverbindung verbundene Steuervorrichtung aufweist. Dabei ist die Netzwerkzugangsvorrichtung so ausgebildet, dass sie, wenn sie in einer Kommunikationsverbindung mit dem Mobilfunknetz steht, Daten an wenigstens eine Mobilfunkbasisstation des Mobilfunknetzes sendet, anhand derer eine räumliche Position oder eine räumlichen Positionsänderung des Fahrzeugs erkannt werden kann. Die Steuervorrichtung ist dabei so ausgebildet und mit der Netzwerkzugangsvorrichtung gekoppelt, dass sie über die Netzwerkzugangsvorrichtung empfangene Signale verarbeiten kann, und beim Verarbeiten eines entsprechenden über die erste Netzwerkzugangsvorrichtung empfangenen vorbestimmten Signals eine oder mehrere dem Signal zugeordnete Funktionen des Objekts steuert oder regelt, insbesondere aktiviert oder deaktiviert. Bevorzugt ist die Überwachungsvorrichtung in ein Fahrzeug integriert.

Unter einer "Steuervorrichtung" im Sinne der Erfindung ist eine Vorrichtung, insbesondere eine elektronische Schaltung oder ein entsprechend programmierter Mikroprozessor oder Mikrocontroller, in einem Objekt zu verstehen, die abhängig von einem über eine Signalverbindung empfangenen Eingangssignal eine oder mehrere Funktionen des Objekts steuern oder regeln, insbesondere auslösen bzw. aktivieren oder deaktivieren kann.

Gemäß einer bevorzugten Ausführungsform der Überwachungsvorrichtung ist dabei die erste Netzwerkzugangsvorrichtung in die Steuervorrichtung integriert, welche insbesondere als Modul des Objekts ausgeführt sein kann. Auf diese Weise lässt sich eine besonders kompakte und, insbesondere aufgrund des Wegfalls einer modulexternen Datenverbindung zwischen beiden, zuverlässige Kombination der Steuerfunktion und der Netzwerkzugangsvorrichtung implementieren.

Gemäß einer weiteren bevorzugten Ausführungsform ist das Objekt ein Fahrzeug und die Überwachungsvorrichtung ist so ausgestaltet, dass sie wenn das Fahrzeug abgestellt wird, über die erste Netzwerkzugangsvorrichtung eine Benachrichtigung an das Mobilfunknetz sendet, die das Verfahren gemäß dem ersten Aspekt der Erfindung auslöst. Dabei kann diese Benachrichtigung insbesondere durch ein Verschließen einer Schließanlage des Fahrzeugs oder über eine entsprechende Eingabe an einer Benutzerschnittstelle des Fahrzeugs, welche insbesondere einer Zugangskontrolle unterliegen kann, ausgelöst werden.

Bei einer bevorzugten Variante dieser Ausführungsform ist wie oben beschrieben eine separate Datenverarbeitungsvorrichtung an der Überwachung beteiligt und die von der ersten Netzwerkzugangsvorrichtung ausgesandte Benachrichtigung zur Auslösung der Überwachung enthält eine Kennung wenigstens einer der Mobilfunkbasisstationen, mit denen die erste Netzwerkzugangsvorrichtung in Kommunikationsverbindung steht. Auf diese Weise kann die separate Datenverarbeitungsvorrichtung, bei einer Weiterleitung der Benachrichtigung an diese über die Identität der an der Überwachung beteiligten Mobilfunkbasisstationen informiert werden, so dass die Aufnahme des Zusammenspiels zwischen der separaten Datenverarbeitungsvorrichtung und wenigstens einer der Mobilfunkbasisstationen zum Zwecke der Überwachung beschleunigt und vereinfacht werden kann.

Bei einer weiteren bevorzugten Variante dieser Ausführungsform ist die Überwachungsvorrichtung, insbesondere deren Steuervorrichtung so konfiguriert, dass sie beim Abstellen des Fahrzeugs eine Alarmanlage des Fahrzeugs aktiviert.

Gemäß einer weiteren bevorzugten Variante dieser Ausführungsform ist die Überwachungsvorrichtung, insbesondere deren Steuervorrichtung so konfiguriert, dass sie beim Abstellen des Fahrzeugs eine Energiesparfunktion des Fahrzeugs aktiviert, bei der ein Fahrzeug-Bordnetz heruntergefahren wird, um Strom zu sparen. Dabei kann auch bevorzugt die Steuervorrichtung mit Ausnahme der ersten Netzwerkzugangsvorrichtung heruntergefahren werden. Besonders bevorzugt wechselt dabei die erste Netzwerkzugangsvorrichtung jedoch in einen stromsparenden "Leerlauf (z.B. IDLE)"-Modus, bei dem die Kommunikationsverbindung zum Mobilfunknetz nur noch eingeschränkt und soweit erhalten wird, dass die gewünschte Überwachungsfunktion realisiert werden kann.

Gemäß einer weiteren bevorzugten Ausführungsform ist das Objekt ein Fahrzeug und die durch die Überwachungsvorrichtung gemäß eines entsprechenden an der Überwachungsvorrichtung empfangenen vorbestimmten Signals steuerbaren oder regelbaren Funktionen des Fahrzeugs umfassen eine oder mehrere der folgenden Funktionen oder wenigstens eine Kombination daraus:
ein Ausgeben eines Warnsignals, welches wenigstens einen menschlichen Sinn anspricht; ein Senden eines Signals durch die erste Netzwerkzugangsvorrichtung, mittels dessen einen technischen Zustand des Fahrzeugs kennzeichnende Informationen über das Mobilfunknetz an wenigstens eine Mobilfunkbasisstation oder zusätzlich an eine oder mehrere Netzwerkzugangsvorrichtungen gesendet werden; ein Unterbrechen oder Beschränken der Fahrbereitschaft des Fahrzeugs; ein Erfassen der Position oder eines Zustands des Fahrzeugs und Senden der Position beziehungsweise von Informationen über den Zustand über eine Kommunikationsverbindung, insbesondere über das Mobilfunknetz; eine Funktion einer Alarmanlage; ein Ausgeben einer Meldung an einer Benutzerschnittstelle des Fahrzeugs oder der ersten Netzwerkzugangsvorrichtung; ein Ausgeben eines akustischer Effekts; eine Klimatisierungsfunktion; ein Betrieb von Leuchtmitteln; eine Funktion einer Schließanlage; eine Einstellung oder Verstellung wenigstens eines Sitzes oder wenigstens eines Spiegels; eine Funktion eines Informations- oder Unterhaltungssystems; eine Funktion eines Schiebdachs oder Cabriolet-Dachs.

Ein noch weiterer Aspekt der hier beschriebenen Objektüberwachung betrifft ein Fahrzeug, insbesondere ein Kraftfahrzeug, das eine Überwachungsvorrichtung gemäß dem zweiten Aspekt der Erfindung aufweist.

Ein noch weiterer Aspekt der hier beschriebenen Objektüberwachung betrifft eine Netzwerkzugangsvorrichtung, insbesondere ein Mobilfunkgerät oder einen Computer mit Mobilfunkmodem, die so konfiguriert oder programmiert ist, dass sie die Funktion einer zweiten Netzwerkzugangsvorrichtung im Sinne der Erfindung, ausführen kann. Insbesondere ist sie demgemäß in der Lage, in einer Kommunikationsverbindung mit dem Mobilfunknetz zu stehen und an wenigstens eine Mobilfunkbasisstation des Mobilfunknetzes (zweite) Daten an diese zu senden, auf deren Basis eine räumliche Position oder eine räumlichen Positionsänderung der (zweiten) Netzwerkzugangsvorrichtung erfasst werden können. Des Weiteren, kann sie demgemäß in der Lage sein, über die Kommunikationsverbindung Informationen und insbesondere wenigstens ein vorbestimmtes Signal zu empfangen und eine dem Signal zugeordnete Funktionalität der Netzwerkzugangsvorrichtung zu steuern oder zu regeln, insbesondere zu aktivieren oder zu deaktivieren. Die Konfiguration bzw. Programmierung der Netzwerkzugangsvorrichtung kann insbesondere mittels einer sogenannten "Applikation (App)" erfolgen, die dem Nutzer der Netze Zugangsvorrichtung über eine Benutzerschnittstelle Informationen zur Verfügung stellt. Solche Informationen können insbesondere die räumliche Position oder Positionsänderungen, Eigenschaften oder damit verbundene Attribute, oder technische Zustände des überwachten Objekts betreffen. Dies kann insbesondere verwendet werden um Informationen über die räumliche Nähe oder Eigenschaften oder Zustände (z.B. Fahrzeugtyp, Ausstattung, Tankfüllung, verbleibende Reichweite) usw. eines Car-Sharing Fahrzeugs bereitzustellen.

Weitere Vorteile, Merkmale und Anwendungsmöglichkeiten der vorliegenden Erfindung ergeben sich aus der nachfolgenden Beschreibung im Zusammenhang mit den Figuren.

Es zeigt:
**Fig. 1** schematisch ein Objektüberwachungssystem gemäß einer bevorzugten Ausführungsform der Erfindung;
**Fig. 2** schematisch ein Fahrzeug mit einer Überwachungsvorrichtung gemäß einer einer bevorzugten Ausführungsform der Erfindung;
**Fig. 3** ein Flussdiagramm zur Veranschaulichung einer bevorzugten Ausführungsform des erfindungsgemäßen Verfahrens.

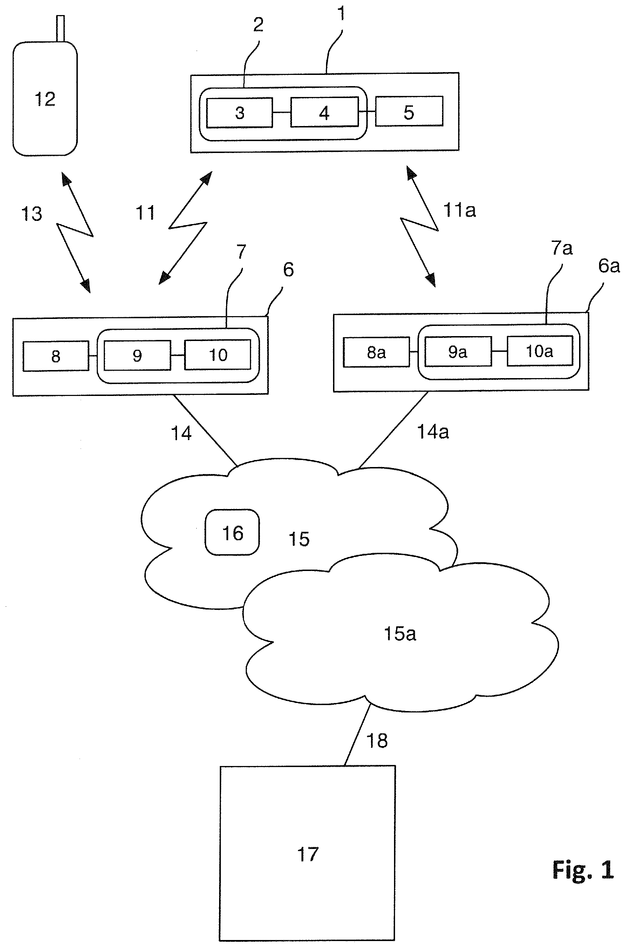

In **Fig. 1** ist ein Systems zur Überwachung eines Objekts 1 mittels eines Mobilfunknetzes gezeigt. Das zu überwachende Objekt 1 weist dabei eine Überwachungsvorrichtung 2 auf, in der wiederum eine Steuervorrichtung 3 sowie eine erste Netzwerkzugangsvorrichtung 4 integriert sind und miteinander in Datenverbindung stehen. Zusätzlich weist das Objekt 1 ein Positionsbestimmungssystem 5 auf, welches insbesondere satellitengestützt sein kann (bevorzugt ein GPS-System). Das Objekt 1 steht über die erste Netzwerkzugangsvorrichtung 4 in Kommunikationsverbindung 11, 11a mit einer oder mehreren Mobilfunkbasisstationen 6, 6a des Mobilfunknetzes (In Fig. 1 sind nur zwei der Mobilfunkbasisstationen gezeigt).

Die Mobilfunkbasisstationen 6, 6a weisen jeweils eine Edge-Computing-Einheit 7, 7a auf, die wiederum einen oder mehrere Mikroprozessoren 9, 9a sowie einen Speicher 10, 10a, bevorzugt einen oder mehrere Halbleiterspeicherbausteine, aufweist. Im Speicher sind jeweils ein oder mehrere Programme zur Durchführung eines erfindungsgemäßen Objektüberwachungsverfahrens, jedenfalls von dabei durch die Mobilfunkbasisstation(en) auszuführenden Verfahrensschritten, abgelegt.

Eine zweite Netzwerkzugangsvorrichtung 12, die insbesondere ein Mobiltelefon, bevorzugt ein Smartphone, oder ein tragbarer Computer, insbesondere ein Tablet-Computer, mit Mobilfunkmodem sein kann, steht über eine Kommunikationsverbindung 13 mit wenigstens einer der Mobilfunkbasisstationen 6, 6a in Verbindung.

Jede der Mobilfunkbasisstationen 6, 6a ist über eine Kommunikationsverbindung 14, 14a mit einem Kernnetz 15 des Mobilfunknetzes verbunden, welches bevorzugt mit einem oder mehreren weiteren Kommunikationsnetzen 15a in Kommunikationsverbindung steht. Das Mobilfunknetz, insbesondere dessen Kernnetz 15 kann insbesondere eine Mobilitätsmanagement-Einheit 16, insbesondere eine "Mobiltity Management Entity" (MME) gemäß dem LTE Standard, aufweisen. Eine separate Datenverarbeitungsvorrichtung 17 (Backend) steht mit dem Kernnetz 15 unmittelbar oder mittelbar über eines oder mehrere der weiteren Kommunikationsnetze 15a in Kommunikationsverbindung 18, insbesondere in Datenverbindung.

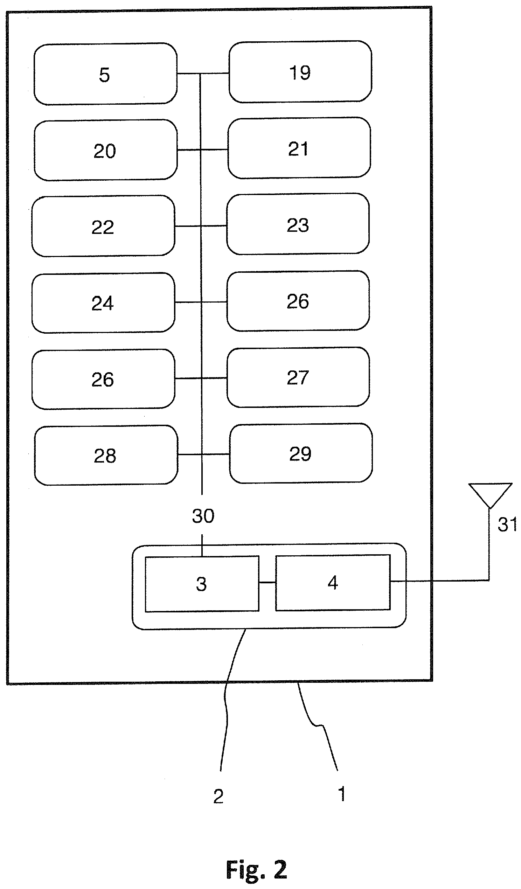

In **Fig. 2** ist schematisch und exemplarisch für ein zu überwachendes Objekt ein Fahrzeug 1 mit einer Überwachungsvorrichtung 2 gemäß einer bevorzugten Ausführungsform der Erfindung gezeigt. Die Überwachungsvorrichtung 2 weist dabei eine Steuervorrichtung 3, insbesondere eine Telematik-Steuervorrichtung des Fahrzeugs, sowie eine erste Netzwerkzugangsvorrichtung 4 auf welche über eine Antenne 31 in Kommunikationsverbindung mit wenigstens einer Mobilfunkbasisstation 6, 6a stehen kann. Die Steuervorrichtung 3 ist dabei an ein Fahrzeugbussystem 30, das insbesondere ein standardisiertes CAN-Bussystem sein kann, angeschlossen und kann darüber Befehle an eine oder mehrere ebenfalls an das Fahrzeugbussystem 30 angeschlossene Fahrzeugkomponenten zu deren Steuerung oder Regelung, insbesondere Aktivierung oder Deaktivierung, übermitteln. Solche Fahrzeugkomponenten können insbesondere sein: eine Komponente 5 zum Erfassen der Position des Fahrzeugs 1, eine Komponente 19 zum Erfassen eines technischen Zustands des Fahrzeugs 1, eine Komponente 20 zum Unterbrechen oder Beschränken der Fahrbereitschaft des Fahrzeugs 1, insbesondere eine Wegfahrsperre, eine Alarmanlage 21, eine Benutzerschnittstelle 22, ein Tongeber 23, insbesondere Lautsprecher oder Lautsprechersystem, eine Klimaanlage 24, insbesondere eine Heizung, eine Kühlung oder eine Scheibenentfrostungsvorrichtung, ein Leuchtmittel 25, eine Schließanlage 26, eine einstellbarer Sitz oder Spiegel 27, ein Informations- oder Unterhaltungssystem 28 oder ein verstellbares Fahrzeugdach 29, insbesondere eine Schiebedach oder ein Cabriolet-Dach.

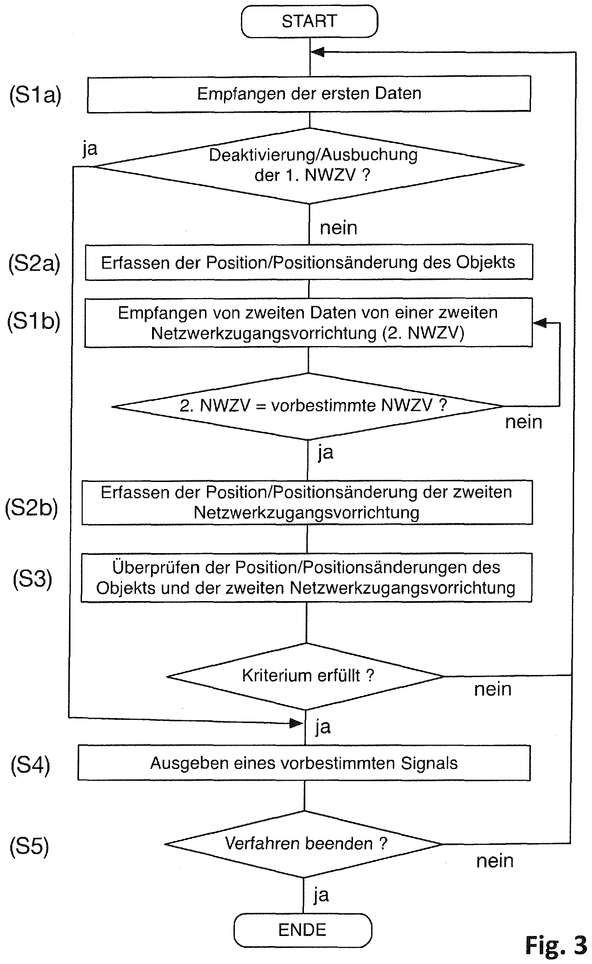

In **Fig. 3** ist ein Flussdiagramm zur Veranschaulichung einer bevorzugten Ausführungsform des Überwachungsverfahrens gezeigt. Dabei wird das Verfahren gestartet, wenn eine Mobilfunkbasisstation von dem zu bewachenden Objekt eine entsprechende Benachrichtigung empfängt (START). Wenn es sich bei dem Objekt insbesondere um ein Fahrzeug handelt, so kann die Benachrichtigung durch ein Abstellen des Fahrzeugs ausgelöst werden. In einem ersten Schritt S1a empfängt wenigstens eine der Mobilfunkbasisstationen 6, 6a eines Mobilfunknetzes erste Daten von einer Netzwerkzugangsvorrichtung 4 des zu überwachenden Objekts 1. Nachfolgend (wahlweise auch davor) kann optional eine Prüfung dahingehend erfolgen, ob die erste Netzwerkzugangsvorrichtung unautorisiert deaktiviert oder aus dem Netzwerk ausgebucht wurde. Dies ist insbesondere der Fall, wenn die Kommunikationsverbindung zwischen der ersten Netzwerkzugangsvorrichtung und der Mobilfunkbasisstation, insbesondere nicht ordnungsgemäß, unterbrochen oder beendet wurde. Ergibt die Prüfung, dass eine solche unautorisierte Deaktivierung oder Ausbuchung erfolgt ist, so wird in einem Schritt S4 ein entsprechendes vorbestimmte Signal ausgegeben. Andernfalls geht das Verfahren zu einem Schritt S2a über, in dem auf Basis der ersten Daten die Position oder eine Positionsänderungen des Objekts 1 erfasst wird. in einem weiteren Schritt S1b werden von einer zweiten Netzwerkzugangsvorrichtung 12 zweite Daten über eine Kommunikationsverbindung 13 zwischen der zweiten Netzwerkzugangsvorrichtung 12 und wenigstes einer der Mobilfunkbasisstationen 6, 6a des Mobilfunknetzes empfangen. auf Basis dieser zweiten Daten erfolgt dann eine Prüfung, ob es sich bei der zweiten Netzwerkzugangsvorrichtung 12 um eine vorbestimmte Netzwerkzugangsvorrichtung handelt. Dabei kann die Vorbestimmung die Auswahl nur einer einzigen Netzwerkzugangsvorrichtung 12 oder aber einer Gruppe bestimmter Netzwerkzugangsvorrichtungen 12 umfassen. Handelt es sich bei der Netzwerkzugangsvorrichtung, von der die zweiten Daten empfangen wurden, nicht um eine entsprechend vorbestimmte Netzwerkzugangsvorrichtung 12, so springt das Verfahren zurück zum Schritt S1b und wartet dort gegebenenfalls, bis zweite Daten von einer weiteren Netzwerkzugangsvorrichtung empfangen werden können. Andernfalls wird in einem Schritt S2b die Position bzw. eine Positionsänderungen der vorbestimmten zweiten Netzwerkzugangsvorrichtung 12 erfasst. In einem nachfolgenden Schritt S3 werden dann die Position bzw. Positionsänderungen sowohl des Objekts 1 als auch der zweiten Netzwerkzugangsvorrichtung 12 gemeinsam dahingehend überprüft, ob sie ein vorbestimmtes Kriterium erfüllen. Dieses Kriterium kann sowohl auf das Objekt 1 als auch die zweite Netzwerkzugangsvorrichtung 12 getrennt anwendbar sein. Alternativ kann das Kriterium so definiert sein, dass es nur durch die Positionen bzw. Positionsänderungen sowohl des Objekts 1 als auch der zweiten Netzwerkzugangsvorrichtung 12 gemeinsam erfüllt werden kann. Wenn sich bei der Prüfung herausstellt, dass das vorbestimmte Kriterium nicht erfüllt ist, dann springt der Ablauf des Verfahrens an seinen Beginn zurück. Alternativ dazu kann der Sprung zurück auch nur bis zum Schritt S1b erfolgen (nicht in Fig. 3 dargestellt). Andernfalls, d.h. wenn das vorbestimmte Kriterium erfüllt wurde, geht das Verfahren zu einem Schritt S4 über in dem ein dem Kriterium zugeordnetes vorbestimmtes Signal ausgegeben wird. Dieses Signal kann insbesondere ein Signal sein, welches von einer der Mobilfunkbasisstationen 6, 6a an die erste Netzwerkzugangsvorrichtung des Objekts 1 oder an die bzw. eine zweite Netzwerkzugangsvorrichtung 12 über die entsprechende Kommunikationsverbindung 11a, 11b bzw. 13 übermittelt wird.

Anschließend erfolgt eine Prüfung dahingehend, ob das Überwachungsverfahren beendet werden soll. Ist dies nicht der Fall, so springt der Verfahrensablauf an seinen Beginn zurück. Andernfalls wird das Verfahren beendet.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei es sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### Bezugszeichenliste

- 1: Objekt, insbesondere Fahrzeug
- 2: Überwachungsvorrichtung
- 3: Steuervorrichtung
- 4: erste Netzwerkzugangsvorrichtung
- 5: Positionsbestimmungssystem
- 6, 6a: Mobilfunkbasisstationen
- 7, 7a: Edge-Computing-Einheit
- 8, 8a: Mobilfunkschnittstelle
- 9, 9a: Mikroprozessor (en)
- 10, 10a: Speicher, darin abgelegt ein oder mehrere Programme
- 11, 11a: Kommunikationsverbindung(en) zwischen Objekt und Mobilfunkbasisstation(en)
- 12: zweite Netzwerkzugangsvorrichtung
- 13: Kommunikationsverbindung(en) zwischen zweiter Netzwerkzugangsvorrichtung und Mobilfunkbasisstation(en)
- 14, 14a: Kommunikationsverbindung(en) zwischen Mobilfunkbasisstation und Mobilfunkkernnetz
- 15: Mobilfunkkernnetz
- 15a: weitere(s) Kommunikationsnetz(e)
- 16: Mobilitäts-Management-Einheit, MME
- 17: Datenverarbeitungsvorrichtung
- 18: Kommunikationsverbindung zwischen Mobilfunknetz und Datenverarbeitungsvorrichtung
- 19: Komponente zum Erfassen eines technischen Zustands des Fahrzeugs
- 20: Komponente zum Unterbrechen oder Beschränken der Fahrbereitschaft des Fahrzeugs, insbesondere Wegfahrsperre
- 21: Alarmanlage
- 22: Benutzerschnittstelle
- 23: Tongeber, insbesondere Lautsprecher(system)
- 24: Klimatisierungsanlage
- 25: Leuchtmittel
- 26: Schließanlage
- 27: einstellbarer Sitz oder Spiegel
- 28: Informations- oder Unterhaltungssystem
- 29: verstellbares Fahrzeugdach
- 30: Fahrzeugbussystem
- 31: Antenne

## Patentansprüche

1. Verfahren zur Überwachung eines Objekts (1), insbesondere eines Fahrzeugs, mittels einer oder mehreren Mobilfunkbasisstationen (6; 6a) eines Mobilfunknetzes (15, 6, 6a), wobei das Objekt (1) eine erste Netzwerkzugangsvorrichtung (4) für das Mobilfunknetz (15, 6, 6a) aufweist, die in einer Kommunikationsverbindung (11; 11a) mit wenigstens einer der Mobilfunkbasisstationen (6; 6a) steht, wobei das Verfahren die folgenden Schritte umfasst:
S1a) Empfangen von ersten Daten von der ersten Netzwerkzugangsvorrichtung (4) durch die wenigstens eine Mobilfunkbasisstation (6; 6a) und
S2a) Erfassen einer räumlichen Position oder einer räumlichen Positionsänderung des Objekts (1) auf Basis der ersten Daten;
S3) Überprüfen der erfassten Position oder Positionsänderung dahingehend, ob sie ein vorbestimmtes Kriterium erfüllt; und
S4) wenn dies der Fall ist, Ausgeben eines vorbestimmten Signals;
wobei zumindest einer der Schritte S2a) und S3) durch die wenigstens eine Mobilfunkbasisstation (6; 6a) ausgeführt wird; und wobei das Verfahren folgende weitere Schritte umfasst:
Feststellen in einer Überwachungsvorrichtung (2) des Objekts (1), ob eine Deaktivierung der ersten Netzwerkzugangsvorrichtung (4) oder ihre Ausbuchung aus dem Mobilfunknetz (15, 6, 6a) initiiert wird oder bereits erfolgt ist; und wenn dies der Fall ist, Auslösen des vorbestimmten Signals, wobei:
das vorbestimmte Signal an eine jeweilige vorbestimmte Netzwerkzugangsvorrichtung (4) zumindest eines Empfängers adressiert wird, um diesen zu alarmieren; und
wobei die erste Netzwerkzugangsvorrichtung (4) in ein Fahrzeug integriert oder damit über eine Datenverbindung verbunden ist und das vorbestimmte Signal zumindest ein Signal umfasst, mittels dessen die Mobilfunkbasisstation (6; 6a) über die Kommunikationsverbindung (11; 11a) an die erste Netzwerkzugangsvorrichtung (4) Informationen zur Steuerung oder Regelung einer oder mehrerer Funktionen des Fahrzeugs sendet.

2. Verfahren gemäß Anspruch 1, wobei eine vorbestimmte zweite Netzwerkzugangsvorrichtung (12) für das Mobilfunknetz (15, 6, 6a) in einer Kommunikationsverbindung (13) mit wenigstens einer der Mobilfunkbasisstationen (6) steht, und wobei das Verfahren die folgenden weiteren Schritte umfasst:
S1b) Empfangen von zweiten Daten von der zweiten Netzwerkzugangsvorrichtung (12) durch die wenigstens eine Mobilfunkbasisstation (6) und
S2b) Erfassen einer räumlichen Position oder einer räumlichen Positionsänderung der zweiten Netzwerkzugangsvorrichtung (12) auf Basis der zweiten Daten;
wobei das Überprüfen der erfassten Position oder Positionsänderung im Schritt S3) ein Überprüfen der erfassten Positionen oder Positionsänderungen der ersten und der zweiten Netzwerkzugangsvorrichtungen (12) dahingehend umfasst, ob sie gemeinsam ein vorbestimmtes Kriterium erfüllen und wenn dies der Fall ist, im Schritt S4) das vorbestimmte Signal ausgegeben wird.

3. Verfahren gemäß einem der vorausgehenden Ansprüche, wobei das Mobilfunknetz (15, 6, 6a) ein zellulares Mobilfunknetz ist und dass Erfassen der räumlichen Position oder Positionsänderung einer Netzwerkzugangsvorrichtung (4; 12) ein Erfassen eines Zellwechsels, "Handover", der entsprechenden Netzwerkzugangsvorrichtung (4; 12) umfasst.

4. Verfahren gemäß einem der vorausgehenden Ansprüche, wobei das vorbestimmte Kriterium eines der folgenden Kriterien a) bis e) oder eine Kombination daraus umfasst:
a) eine beliebige absolute Veränderung der erfassten Position der ersten Netzwerkzugangsvorrichtung (4),
b) eine beliebige absolute Veränderung der erfassten Position der ersten Netzwerkzugangsvorrichtung (4) um eine vorbestimmte Mindestentfernung oder mehr;
c) ein Zellwechsel der ersten Netzwerkzugangsvorrichtung (4);
d) ein nicht vorausgehend autorisierter Zellwechsel der ersten Netzwerkzugangsvorrichtung (4);
e) wenn ein Einbuchen einer zweiten Netzwerkzugangsvorrichtung (12) in das Mobilfunknetz (15, 6, 6a) erfolgt oder schon erfolgt ist:
e1) ein Unterschreiten einer vorbestimmten Mindestentfernung zwischen den erfassten Positionen der ersten und der zweiten Netzwerkzugangsvorrichtungen (4; 12); oder
e2) ein Zellwechsel der zweiten Netzwerkzugangsvorrichtung (12) von einer anderen Mobilfunkzelle des Mobilfunknetzes (15, 6, 6a) in dieselbe Mobilfunkzelle, in der sich auch die erste Netzwerkzugangsvorrichtung (4) befindet.

5. Verfahren gemäß einem der vorausgehenden Ansprüche, wobei mittels des vom vorbestimmten Signal umfassten Signals über das Mobilfunknetz (15, 6, 6a) Informationen zur Ausgabe an eine mit der ersten oder zweiten Netzwerkszugangsvorrichtung (4; 12) integrierten oder verbundenen Benutzerschnittstelle gesendet werden.

6. Verfahren gemäß Anspruch 1, wobei die Signalisierung zur Steuerung oder Regelung einer der folgenden Funktionen des Fahrzeugs oder einer Kombination daraus konfiguriert ist:
- ein Unterbrechen oder Beschränken der Fahrbereitschaft des Fahrzeugs;
- ein Erfassen der Position oder eines Zustands des Fahrzeugs und Senden der Position beziehungsweise von Informationen über den Zustand über eine Kommunikationsverbindung (11; 11a);
- eine Funktion einer Alarmanlage;
- ein Ausgeben einer Meldung an einer Benutzerschnittstelle des Fahrzeugs oder der ersten Netzwerkzugangsvorrichtung (4);
- ein Ausgeben eines akustischen Effekts;
- eine Klimatisierungsfunktion;
- ein Betrieb von Leuchtmitteln;
- eine Funktion einer Schließanlage;
- eine Einstellung oder Verstellung wenigstens eines Sitzes oder wenigstens eines Spiegels;
- eine Funktion eines Informations- oder Unterhaltungssystems;
- eine Funktion eines Schiebedachs oder Cabriolet-Dachs.

7. Verfahren gemäß einem der vorausgehenden Ansprüche, wobei das Austauschen der ersten Daten zwischen der ersten Netzwerkzugangsvorrichtung (4) und wenigstens einer Mobilfunkbasisstation (6; 6a) des Mobilfunknetzes (15, 6, 6a) wiederholt erfolgt, während die Kommunikationsverbindung (11; 11a) zwischen wenigstens einer der Mobilfunkbasisstationen (6; 6a) und der ersten Netzwerkzugangsvorrichtung (4) besteht.

8. Verfahren gemäß einem der vorausgehenden Ansprüche, wobei die erste Netzwerkzugangsvorrichtung (4) in ein Fahrzeug integriert oder damit über eine Datenverbindung verbunden ist und der Ablauf des Verfahrens durch ein Abstellen des Fahrzeugs ausgelöst wird.

9. Verfahren gemäß einem der vorausgehenden Ansprüche, wobei das Verfahren durch wenigstens eine Mobilfunkbasisstation (6; 6a) des Mobilfunknetzes (15, 6, 6a) und eine mit der Mobilfunkbasisstation (6; 6a) in Kommunikationsverbindung (18) stehende separate Datenverarbeitungsvorrichtung (17) gemeinsam ausgeführt wird, wobei zumindest einer der Schritte S2a, S2b, S3 und S4, durch die Datenverarbeitungsvorrichtung (17) ausgeführt wird.

10. Überwachungsvorrichtung (2) für ein Objekt (1), insbesondere für ein Fahrzeug, aufweisend:
eine erste Netzwerkzugangsvorrichtung (4) für ein Mobilfunknetz (15, 6, 6a); und
eine damit über eine Signalverbindung verbundene Steuervorrichtung (3);
wobei die erste Netzwerkzugangsvorrichtung (4) so ausgebildet ist, dass sie, wenn sie in einer Kommunikationsverbindung (11; 11a) mit dem Mobilfunknetz (15, 6, 6a) steht, erste Daten an wenigstens eine Mobilfunkbasisstation (6; 6a) des Mobilfunknetzes (15, 6, 6a) sendet, anhand derer eine räumliche Position oder eine räumliche Positionsänderung des Objekts (1) erkannt werden kann;
wobei die Steuervorrichtung (3) so ausgebildet und mit der ersten Netzwerkzugangsvorrichtung (4) gekoppelt ist, dass sie über die erste Netzwerkzugangsvorrichtung (4) empfangene Signale verarbeiten kann, und beim Verarbeiten eines entsprechenden über die erste Netzwerkzugangsvorrichtung (4) empfangenen vorbestimmten Signals eine oder mehrere dem Signal zugeordnete Funktionen des Objekts (1) steuert oder regelt;
und wobei die Überwachungsvorrichtung (2) derart ausgebildet ist, dass sie feststellen kann, ob eine Deaktivierung der ersten Netzwerkzugangsvorrichtung (4) oder ihre Ausbuchung aus dem Mobilfunknetz (15, 6, 6a) initiiert wird oder bereits erfolgt ist; und wenn dies der Fall ist, das vorbestimmte Signal auslöst, mittels dessen eine oder mehrere Funktionen des Fahrzeugs steuerbar sind.

11. Überwachungsvorrichtung (2) gemäß Anspruch 10, wobei das Objekt (1) ein Fahrzeug ist und die durch die Überwachungsvorrichtung (2) gemäß eines entsprechenden an der Überwachungsvorrichtung (2) empfangenen vorbestimmten Signals steuerbaren oder regelbaren Funktionen des Fahrzeugs eine oder mehrere der folgenden Funktionen (20 bis 29) oder wenigstens eine Kombination daraus umfassen:
- ein Ausgeben eines Warnsignals, welches wenigstens einen menschlichen Sinn anspricht;
- ein Unterbrechen oder Beschränken der Fahrbereitschaft des Fahrzeugs;
- ein Erfassen der Position oder eines Zustands des Fahrzeugs und Senden der Position beziehungsweise von Informationen über den Zustand über eine Kommunikationsverbindung (11; 11a), insbesondere über das Mobilfunknetz (15, 6, 6a);
- eine Funktion einer Alarmanlage;
- ein Ausgeben einer Meldung an einer Benutzerschnittstelle des Fahrzeugs oder der ersten Netzwerkzugangsvorrichtung (4);
- ein Ausgeben eines akustischer Effekts;
- eine Klimatisierungsfunktion;
- ein Betrieb von Leuchtmitteln;
- eine Funktion einer Schließanlage;
- eine Einstellung oder Verstellung wenigstens eines Sitzes oder wenigstens eines Spiegels;
- eine Funktion eines Informations- oder Unterhaltungssystems;
- eine Funktion eines Schiebedachs oder Cabriolet-Dachs.

## Claims

1. Method for monitoring an object (1), in particular a vehicle, by means of one or more mobile radio base stations (6; 6a) of a mobile radio network (15, 6, 6a), wherein the object (1) has a first network access device (4) for the mobile radio network (15, 6, 6a), which network access device has a communication connection (11; 11a) to at least one of the mobile radio base stations (6; 6a), wherein the method comprises the following steps:
S1a) reception of first data from the first network access device (4) by the at least one mobile radio base station (6; 6a) and
S2a) detection of a physical position or of a physical change of position of the object (1) on the basis of the first data;
S3) checking of the detected position or change of position to determine whether it satisfies a predetermined criterion; and
S4) if this is the case, output of a predetermined signal;
wherein at least one of steps (S2a) and (S3) is carried out by the at least one mobile radio base station (6; 6a); and wherein the method comprises the following further steps:
establishment, in a monitoring device (2) of the object (1), of whether deactivation of the first network access device (4) or deregistration thereof from the mobile radio network (15, 6, 6a) is being initiated or has already been effected; and if this is the case, triggering of the predetermined signal, wherein:
the predetermined signal is addressed to a respective predetermined network access device (4) of at least one receiver in order to alert the latter; and
wherein the first network access device (4) is integrated in a vehicle or connected thereto via a data connection, and the predetermined signal comprises at least one signal that is used by the mobile radio base station (6; 6a) to send to the first network access device (4), via the communication connection (11; 11a), information for the control or regulation of one or more functions of the vehicle.

2. Method according to Claim 1, wherein a predetermined second network access device (12) for the mobile radio network (15, 6, 6a) has a communication connection (13) to at least one of the mobile radio base stations (6), and wherein the method comprises the following further steps:
S1b) reception of second data from the second network access device (12) by the at least one mobile radio base station (6) and
S2b) detection of a physical position or of a physical change of position of the second network access device (12) on the basis of the second data;
wherein the checking of the detected position or change of position in step (S3) comprises checking of the detected positions or changes of positions of the first and second network access devices (12) to determine whether they jointly satisfy a predetermined criterion, and if this is the case, the predetermined signal is output in step (S4).

3. Method according to either of the preceding claims, wherein the mobile radio network (15, 6, 6a) is a cellular mobile radio network and the detection of the physical position or change of position of a network access device (4; 12) comprises detection of a cell change, "handover", for the relevant network access device (4; 12).

4. Method according to one of the preceding claims, wherein
the predetermined criterion comprises one of the following criteria a) to e) or a combination thereof:
a) any absolute change in the detected position of the first network access device (4);
b) any absolute change in the detected position of the first network access device (4) by a predetermined minimum distance or more;
c) a cell change for the first network access device (4);
d) a cell change for the first network access device (4) that has not been authorized in advance;
e) if registration of a second network access device (12) in the mobile radio network (15, 6, 6a) is being effected or has already been effected:
e1) a drop below a predetermined minimum distance between the detected positions of the first and second network access devices (4; 12); or
e2) a cell change for the second network access device (12) from another mobile radio cell of the mobile radio network (15, 6, 6a) to the same mobile radio cell that also contains the first network access device (4).

5. Method according to one of the preceding claims, wherein the signal comprised by the predetermined signal is used to send, via the mobile radio network (15, 6, 6a), information for output to a user interface that is integrated with or connected to the first or second network access device (4; 12).

6. Method according to Claim 1, wherein the signalling is configured to control or regulate one of the following functions of the vehicle or a combination thereof:
- interruption or limitation of the readiness of the vehicle for driving;
- detection of the position or of a state of the vehicle and sending of the position or of information about the state via a communication connection (11; 11a);
- a function of an alarm installation;
- output of a report on a user interface of the vehicle or the first network access device (4);
- output of an audible effect;
- an air conditioning function;
- operation of illuminants;
- a function of a locking installation;
- a setting or adjustment for at least one seat or at least one mirror;
- a function of an information or entertainment system;
- a function of a sliding roof or convertible roof.

7. Method according to one of the preceding claims, wherein the interchange of the first data between the first network access device (4) and at least one mobile radio base station (6; 6a) of the mobile radio network (15, 6, 6a) is effected repeatedly while the communication connection (11; 11a) exists between at least one of the mobile radio base stations (6; 6a) and the first network access device (4).

8. Method according to one of the preceding claims, wherein the first network access device (4) is integrated in a vehicle or connected thereto via a data connection and the sequence of the method is triggered by parking of the vehicle.

9. Method according to one of the preceding claims, wherein the method is carried out by at least one mobile radio base station (6; 6a) of the mobile radio network (15, 6, 6a) and a separate data processing device (17), which has a communication connection (18) to the mobile radio base station (6; 6a), jointly, with at least one of steps S2a, S2b, S3 and S4 being carried out by the data processing device (17).

10. Monitoring device (2) for an object (1), in particular for a vehicle, having:
a first network access device (4) for a mobile radio network (15, 6, 6a); and
a control device (3) connected thereto via a signal connection;
wherein the first network access device (4) is in a form such that, when it has a communication connection (11; 11a) to the mobile radio network (15, 6, 6a), it sends first data to at least one mobile radio base station (6; 6a) of the mobile radio network (15, 6, 6a), which data can be used to identify a physical position or a physical change of position of the object (1);
wherein the control device (3) is in a form, and coupled to the first network access device (4), such that it can process signals received via the first network access device (4), and, during the processing of an applicable predetermined signal received via the network access device (4), controls or regulates one or more functions of the object (1) that are associated with the signal;
and wherein the monitoring device (2) is in a form such that it can establish whether deactivation of the first network access device (4) or deregistration thereof from the mobile radio network (15, 6, 6a) is being initiated or has already been effected; and if this is the case, triggers the predetermined signal, by means of which one or more functions of the vehicle are controllable.

11. Monitoring device (2) according to Claim 10, wherein the object (1) is a vehicle and the functions of the vehicle that are controllable or regulatable by the monitoring device (2) on the basis of an applicable predetermined signal received on the monitoring device (2) comprise one or more of the following functions (20 to 29) or at least a combination thereof:
- output of a warning signal that addresses at least one human sense;
- interruption or limitation of the readiness of the vehicle for driving;
- detection of the position or of a state of the vehicle and sending of the position or of information about the state via a communication connection (11; 11a), in particular via the mobile radio network (15, 6, 6a);
- a function of an alarm installation;
- output of a report on a user interface of the vehicle or the first network access device (4);
- output of an audible effect;
- an air conditioning function;
- operation of illuminants;
- a function of a locking installation;
- a setting or adjustment for at least one seat or at least one mirror;
- a function of an information or entertainment system;
- a function of a sliding roof or convertible roof.

## Revendications

1. Procédé permettant de surveiller un objet (1), en particulier un véhicule, au moyen d'une ou de plusieurs stations de base de téléphonie mobile (6 ; 6a) d'un réseau de téléphonie mobile (15, 6, 6a), l'objet (1) présentant un premier dispositif d'accès au réseau (4) pour le réseau de téléphonie mobile (15, 6, 6a) qui est en liaison de communication (11 ; 11a) avec au moins l'une des stations de base de téléphonie mobile (6 ; 6a), le procédé comprenant les étapes suivantes consistant à :
S1a) recevoir des premières données du premier dispositif d'accès au réseau (4) par ladite au moins une station de base de téléphonie mobile (6 ; 6a), et
S2a) détecter une position spatiale ou un changement de position spatiale de l'objet (1) sur la base des premières données ;
S3) vérifier la position ou le changement de position détecté(e) pour savoir si un critère prédéterminé est satisfait ; et
S4) si c'est le cas, émettre un signal prédéterminé ;
au moins l'une des étapes S2a) et S3) étant effectuée par ladite au moins une station de base de téléphonie mobile (6 ; 6a) ; et le procédé comprenant les autres étapes suivantes consistant à :
constater dans un dispositif de surveillance (2) de l'objet (1) si une désactivation du premier dispositif d'accès au réseau (4) ou son retrait du réseau de téléphonie mobile (15, 6, 6a) est initié(e) ou a déjà eu lieu ;
et si c'est le cas, déclencher le signal prédéterminé, dans lequel :
le signal prédéterminé est adressé à un dispositif d'accès au réseau (4) prédéterminé respectif d'au moins un destinataire afin de l'alerter ; et
le premier dispositif d'accès au réseau (4) étant intégré dans un véhicule ou étant relié à celui-ci par une liaison de données, et le signal prédéterminé comprenant au moins un signal au moyen duquel la station de base de téléphonie mobile (6 ; 6a) envoie par la liaison de communication (11 ; 11a) au premier dispositif d'accès au réseau (4) des informations pour commander ou réguler une ou plusieurs fonctions du véhicule.

2. Procédé selon la revendication 1, dans lequel un deuxième dispositif d'accès au réseau (12) prédéterminé pour le réseau de téléphonie mobile (15, 6, 6a) est en liaison de communication (13) avec au moins l'une des stations de base de téléphonie mobile (6), et le procédé comprenant les autres étapes suivantes consistant à :
S1b) recevoir des deuxièmes données du deuxième dispositif d'accès au réseau (12) par ladite au moins une station de base de téléphonie mobile (6), et
S2b) détecter une position spatiale ou un changement de position spatiale du deuxième dispositif d'accès au réseau (12) sur la base des deuxièmes données ;
la vérification de la position ou du changement de position détecté(e) à l'étape S3) comprenant une vérification des positions ou changements de position détectés du premier et du deuxième dispositif d'accès au réseau (12) pour savoir s'ils satisfont ensemble à un critère prédéterminé, et si c'est le cas, le signal prédéterminé est émis à l'étape S4).

3. Procédé selon l'une quelconque des revendications précédentes, dans lequel le réseau de téléphonie mobile (15, 6, 6a) est un réseau de téléphonie mobile cellulaire, et la détection de la position spatiale ou d'un changement de position d'un dispositif d'accès au réseau (4 ; 12) comprend une détection d'un changement de cellule, « handover », du dispositif d'accès au réseau (4 ; 12) correspondant.

4. Procédé selon l'une quelconque des revendications précédentes, dans lequel le critère prédéterminé comprend l'un des critères suivants a) à e) ou une combinaison de ceux-ci :
a) un changement absolu quelconque de la position détectée du premier dispositif d'accès au réseau (4),
b) un changement absolu quelconque de la position détectée du premier dispositif d'accès au réseau (4) d'une distance minimale prédéterminée ou plus ;
c) un changement de cellule du premier dispositif d'accès au réseau (4) ;
d) un changement de cellule non autorisé au préalable du premier dispositif d'accès au réseau (4) ;
e) si une insertion d'un deuxième dispositif d'accès au réseau (12) dans le réseau de téléphonie mobile (15, 6, 6a) a lieu ou a déjà eu lieu :
e1) un soupassement d'une distance minimale prédéterminée entre les positions détectées du premier et du deuxième dispositif d'accès au réseau (4 ; 12) ; ou
e2) un changement de cellule du deuxième dispositif d'accès au réseau (12) d'une autre cellule de téléphonie mobile du réseau de téléphonie mobile (15, 6, 6a) vers la même cellule de téléphonie mobile dans laquelle se trouve aussi le premier dispositif d'accès au réseau (4).

5. Procédé selon l'une quelconque des revendications précédentes, dans lequel, au moyen du signal compris dans le signal prédéterminé, par le réseau de téléphonie mobile (15, 6, 6a), des informations à sortir pour une interface utilisateur intégrée ou reliée au premier ou au deuxième dispositif d'accès au réseau (4 ; 12) sont envoyées.

6. Procédé selon la revendication 1, dans lequel la signalisation est configurée pour la commande ou la régulation d'une des fonctions suivantes du véhicule ou d'une combinaison de celles-ci :
- une interruption ou une limitation de la capacité de conduite du véhicule ;
- une détection de la position ou d'un état du véhicule ou l'envoi de la position ou d'informations concernant l'état par une liaison de communication (11 ; 11a) ;
- une fonction d'un système d'alarme ;
- une sortie d'un message à une interface utilisateur du véhicule ou du premier dispositif d'accès au réseau (4) ;
- une sortie d'un effet acoustique ;
- une fonction de climatisation ;
- un fonctionnement de moyens d'éclairage ;
- une fonction d'un système de fermeture ;
- un réglage ou un ajustage d'au moins un siège ou d'au moins un miroir ;
- une fonction d'un système d'information ou de divertissement ;
- une fonction d'un toit ouvrant ou d'une capote de cabriolet.

7. Procédé selon l'une quelconque des revendications précédentes, dans lequel l'échange des premières données entre le premier dispositif d'accès au réseau (4) et au moins une station de base de téléphonie mobile (6 ; 6a) du réseau de téléphonie mobile (15, 6, 6a) est effectué à plusieurs reprises pendant que la liaison de communication (11 ; 11a) existe entre au moins l'une des stations de base de téléphonie mobile (6 ; 6a) et le premier dispositif d'accès au réseau (4) .

8. Procédé selon l'une quelconque des revendications précédentes, dans lequel le premier dispositif d'accès au réseau (4) est intégré dans un véhicule ou est relié à celui-ci par une liaison de données, et la séquence du procédé est déclenchée par un parcage du véhicule.

9. Procédé selon l'une quelconque des revendications précédentes, le procédé étant effectué en commun par au moins une station de base de téléphonie mobile (6 ; 6a) du réseau de téléphonie mobile (15, 6, 6a) et un dispositif de traitement de données (17) séparé, en liaison de communication (18) avec la station de base de téléphonie mobile (6 ; 6a), au moins l'une des étapes S2a, S2b, S3 et S4 étant effectuée par le dispositif de traitement de données (17).

10. Dispositif de surveillance (2) pour un objet (1), en particulier pour un véhicule, présentant :
un premier dispositif d'accès au réseau (4) pour un réseau de téléphonie mobile (15, 6, 6a) ; et
un dispositif de commande (3) relié à celui-ci par une liaison de signal ;
le premier dispositif d'accès au réseau (4) étant réalisé de telle sorte que lorsqu'il est en liaison de communication (11 ; 11a) avec le réseau de téléphonie mobile (15, 6, 6a), il envoie des premières données à au moins une station de base de téléphonie mobile (6 ; 6a) du réseau de téléphonie mobile (15, 6, 6a) à l'aide desquelles une position spatiale ou un changement de position spatiale de l'objet (1) peut être identifié(e) ;
le dispositif de commande (3) étant réalisé et couplé avec le premier dispositif d'accès au réseau (4) de telle sorte qu'il peut traiter des signaux reçus par l'intermédiaire du premier dispositif d'accès au réseau (4), et lors du traitement d'un signal prédéterminé, reçu par l'intermédiaire du premier dispositif d'accès au réseau (4), il commande ou régule une ou plusieurs fonctions de l'objet (1) associées au signal ;
et le dispositif de surveillance (2) étant réalisé de telle sorte qu'il peut constater si une désactivation du premier dispositif d'accès au réseau (4) ou son retrait du réseau de téléphonie mobile (15, 6, 6a) est initié(e) ou a déjà eu lieu ; et si c'est le cas, il déclenche le signal prédéterminé permettant de commander une ou plusieurs fonctions du véhicule.

11. Dispositif de surveillance (2) selon la revendication 10, dans lequel l'objet (1) est un véhicule et les fonctions du véhicule pouvant être commandées ou régulées par le dispositif de surveillance (2) selon un signal prédéterminé correspondant, reçu au niveau du dispositif de surveillance (2), comprennent une ou plusieurs des fonctions suivantes (20 à 29) ou du moins une combinaison de celles-ci :
- une sortie d'un signal d'alarme stimulant au moins un sens humain ;
- une interruption ou une limitation de la capacité de conduite du véhicule ;
- une détection de la position ou d'un état du véhicule et l'envoi de la position ou d'informations concernant l'état par une liaison de communication (11 ; 11a), en particulier par le réseau de téléphonie mobile (15, 6, 6a) ;
- une fonction d'un système d'alarme ;
- une sortie d'un message à une interface utilisateur du véhicule ou du premier dispositif d'accès au réseau (4) ;
- une sortie d'un effet acoustique ;
- une fonction de climatisation ;
- un fonctionnement de moyens d'éclairage ;
- une fonction d'un système de fermeture ;
- un réglage ou un ajustage d'au moins un siège ou d'au moins un miroir ;
- une fonction d'un système d'information ou de divertissement ;
- une fonction d'un toit ouvrant ou d'une capote de cabriolet.
